(19) Europäisches Patentamt
European Patent Office
Office européen des brevets

(11) **EP 4 645 445 A1**

(12) **EUROPEAN PATENT APPLICATION**
published in accordance with Art. 153(4) EPC

(43) Date of publication:
**05.11.2025 Bulletin 2025/45**

(21) Application number: **23912166.8**

(22) Date of filing: **26.12.2023**

(51) International Patent Classification (IPC):
*H01M 4/139* (2010.01)    *H01M 4/62* (2006.01)
*H01M 10/052* (2010.01)    *H01M 10/054* (2010.01)
*H01M 10/0566* (2010.01)    *H01M 10/058* (2010.01)

(52) Cooperative Patent Classification (CPC):
**H01M 4/139; H01M 4/62; H01M 10/052;**
**H01M 10/054; H01M 10/0566; H01M 10/058;**
**Y02E 60/10**

(86) International application number:
**PCT/JP2023/046714**

(87) International publication number:
**WO 2024/143388 (04.07.2024 Gazette 2024/27)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **27.12.2022  JP 2022210786**

(71) Applicant: **FUJIFILM Corporation**
**Tokyo 106-8620 (JP)**

(72) Inventor: **ISOJIMA, Hiroshi**
**Minamiashigara-shi, Kanagawa 250-0193 (JP)**

(74) Representative: **HGF**
**HGF Limited**
**1 City Walk**
**Leeds LS11 9DX (GB)**

(54) **SLURRY USED TO FORM ELECTRODE OF NONAQUEOUS ELECTROLYTE SECONDARY BATTERY, NONAQUEOUS ELECTROLYTE SECONDARY BATTERY, AND METHOD FOR PRODUCING NONAQUEOUS ELECTROLYTE SECONDARY BATTERY**

(57)    Provided are a slurry for forming an electrode of a non-aqueous electrolytic solution secondary battery, containing an electrode active material, a conductive auxiliary agent, and a dispersion medium, and satisfying the following expressions (1) to (4); a non-aqueous electrolytic solution secondary battery using the slurry; and a manufacturing method thereof.

$$\text{Expression (1)} \quad 0 < y - x \le 10$$

$$\text{Expression (2)} \quad 0 \le x \le 30$$

$$\text{Expression (3)} \quad S_{BET} \ge 170$$

$$\text{Expression (4)} \quad \Delta E \le 30$$

x: a liquid absorption amount (mL) of the dispersion medium per 100 g of the total of the electrode active material and the conductive auxiliary agent
y: an amount (mL) of the dispersion medium per 100 g of the total of the electrode active material and the conductive auxiliary agent
$S_{BET}$: a BET specific surface area ($m^2$/g) of the conductive auxiliary agent
$\Delta E$: an absolute value (mN/m) of a difference between a surface free energy of the dispersion medium and a surface free energy of the conductive auxiliary agent

FIG. 1

EP 4 645 445 A1

**Description**

**BACKGROUND OF THE INVENTION**

1. Field of the Invention

The present invention relates to a slurry for forming an electrode of a non-aqueous electrolytic solution secondary battery, a non-aqueous electrolytic solution secondary battery, and a manufacturing method of a non-aqueous electrolytic solution secondary battery.

2. Description of the Related Art

A non-aqueous electrolytic solution secondary battery typified by a lithium ion secondary battery has high energy density and is excellent in storage performance, low-temperature operability, and the like, and thus is widely used for portable electronic apparatuses such as a mobile phone and a notebook computer. In addition, the battery has been enlarged and been used in transportation equipment such as automobiles, and the use of the battery as a storage device for nighttime power, power generation by natural energy, and the like has also been promoted.

A general manufacturing method of the non-aqueous electrolytic solution secondary battery will be described. First, a positive electrode and a negative electrode are disposed to face each other with a separator interposed therebetween to obtain an electrode laminate, the positive electrode consisting of a laminated structure of a positive electrode collector and a positive electrode active material layer and the negative electrode consisting of a laminated structure of a negative electrode collector and a negative electrode active material layer. Usually, the electrode laminate is further wound to obtain a wound electrode body, and the wound electrode body is stored in a battery case or the like. Next, an electrolytic solution is poured into the battery case, and the entire positive electrode active material layer, the separator, and the negative electrode active material layer are permeated with the electrolytic solution. Thereafter, the obtained battery is charged and discharged (initialized) to form a solid electrolyte interface (SEI) on the negative electrode, thereby obtaining the non-aqueous electrolytic solution secondary battery. In the following description, the positive electrode and the negative electrode may be collectively referred to as "electrode"; the positive electrode active material and the negative electrode active material may be collectively referred to as "electrode active material" or simply "active material"; and the positive electrode collector and the negative electrode collector may be collectively referred to as "electrode collector" or simply "collector".

A technique for increasing a capacity of the non-aqueous electrolytic solution secondary battery has been studied. For example, JP2017-147222A discloses a technique for causing an electrode active material layer to function as a secondary battery in a state of a slurry containing a high content of an active material. Specifically, JP2017-147222A discloses an electrochemical cell including a positive electrode consisting of a non-bonded body which contains a first active material and an electrolytic solution in a first non-aqueous liquid electrolyte; a negative electrode consisting of a non-bonded body which contains a second active material and an electrolytic solution in a second non-aqueous liquid electrolyte; and an ion permeable membrane disposed between the positive electrode and the negative electrode, in which the positive electrode and the negative electrode each have a thickness of approximately 200 $\mu$m to approximately 3,000 $\mu$m.

According to the technique disclosed in JP2017-147222A, since an electrode active material layer (a positive electrode active material layer and a negative electrode active material layer) contains an electrolyte and is in a slurry-like and non-bonded state, as in the positive electrode and the negative electrode, the electrode active material layer can be formed into a thick film while maintaining flexibility of the electrode active material layer, a binder which bonds solid particles is not required, and the charge capacity and the entire energy density can be significantly increased while maintaining the flexibility of the battery. The non-aqueous electrolytic solution secondary battery in which the electrode active material layer is formed in a slurry state containing an electrolytic solution, as disclosed in JP2017-147222A, may be referred to as a semi-solid state secondary battery in the following description.

**SUMMARY OF THE INVENTION**

In manufacturing of a general non-aqueous electrolytic solution secondary battery which is not the semi-solid state secondary battery, the electrode active material layer is usually formed by applying a slurry (slurry for forming an electrode) containing an electrode active material and a conductive auxiliary agent onto an electrode collector, and drying the slurry. In this case, in order to improve a manufacturing efficiency, it is required to control characteristics of the slurry for forming an electrode from various angles. For example, in order to improve handleability of the slurry for forming an electrode and to uniformly and accurately form the electrode active material layer, the slurry for forming an electrode is required to have an appropriate low viscosity and to be capable of maintaining a stable dispersion state of solid particles (active material and conductive auxiliary agent) contained therein (dispersion stability). In addition, in order to shorten manufacturing time, the slurry for forming an electrode is required to be capable of being quickly dried after coating (easy drying properties).

From the viewpoint of the easy drying properties, it is considered to reduce an amount of a solvent in the slurry for forming an electrode and to apply a slurry having a high concentration of solid contents (total content of the active material and the conductive auxiliary agent). However, in a case where the concentration of solid contents in the electrode slurry increases, the viscosity of the slurry increases, aggregation is likely to occur and the dispersion stability decreases, and thus coating suitability is deteriorated. As a result, uniformity of the obtained electrode active material layer is impaired, the surface is in a rough state, and thus the performance of the obtained batteries is likely to vary.

In addition, in order to increase a capacity (increase an energy density) of the non-aqueous electrolytic solution secondary battery, there is an attempt to increase the content of the active material which stores ions and to suppress the content of the conductive auxiliary agent. However, in a case where the content of the conductive auxiliary agent is suppressed, the conductivity is lowered, which is disadvantageous in output characteristics. There is an attempt to achieve both high capacity and high output characteristics by using a small amount of a conductive auxiliary agent having a high specific surface area and easy to construct an electron conduction network; but the conductive auxiliary agent having a high specific surface area induces aggregation of solid particles in the slurry, making it more difficult to ensure the dispersion stability.

In addition, in a case of focusing on the slurry for forming an electrode in the manufacturing of the semi-solid state secondary battery, it is required to increase the concentration of the active material in the slurry for forming an electrode from another viewpoint in addition to the above-described viewpoints. That is, in the semi-solid state secondary battery, the slurry for forming an electrode substantially functions as the electrode active material layer as it is. Therefore, in the manufacturing of the semi-solid state secondary battery, the content of the active material in the slurry for forming an electrode is an important technical element directly linked to the increase in capacity (increase in energy density) of the battery. However, as described above, in a case where the content of the active material is increased and the concentration of solid contents is increased, the coating suitability is deteriorated; and as described above, in a case where a small amount of the conductive auxiliary agent having a high specific surface area is used in order to further increase the content of the active material, the dispersion stability is sacrificed.

An object of the present invention is to provide a slurry for forming an electrode of a non-aqueous electrolytic solution secondary battery, which is capable of obtaining a non-aqueous electrolytic solution secondary battery exhibiting excellent manufacturing suitability (dispersion stability, easy drying properties, and coating suitability) and excellent battery performance while applying a conductive auxiliary agent having a predetermined high specific surface area. Another object of the present invention is to provide a non-aqueous electrolytic solution secondary battery using the slurry for forming an electrode, and a manufacturing method thereof.

The above-described objects of the present invention have been achieved by the following means.

[1] A slurry for forming an electrode of a non-aqueous electrolytic solution secondary battery, the slurry comprising:

an electrode active material;
a conductive auxiliary agent; and
a dispersion medium,
in which the following expressions (1) to (4) are satisfied,

$$\text{the expression (1)} \qquad 0 < y - x \leq 10,$$

$$\text{the expression (2)} \qquad 0 \leq x \leq 30,$$

$$\text{the expression (3)} \qquad S_{BET} \geq 170,$$

$$\text{the expression (4)} \qquad \Delta E \leq 30,$$

x is a liquid absorption amount (mL) of the dispersion medium per 100 g of a total of the electrode active material and the conductive auxiliary agent in the slurry for forming an electrode, and is calculated by the following expression (5),
y is an amount (mL) of the dispersion medium per 100 g of the total of the electrode active material and the conductive auxiliary agent in the slurry for forming an electrode,

$S_{BET}$ is a BET specific surface area (m$^2$/g) of the conductive auxiliary agent, and
$\Delta E$ is an absolute value (mN/m) of a difference between a surface free energy of the dispersion medium and a surface free energy of the conductive auxiliary agent,

$$\text{the expression (5)} \qquad x = [Sa \times da/100] + [Sc \times dc/100],$$

Sa is a liquid absorption amount (mL) of the dispersion medium per 100 g of the electrode active material,
da is a proportion (% by mass) of the electrode active material to the total of the electrode active material and the conductive auxiliary agent in the slurry for forming an electrode,
Sc is a liquid absorption amount (mL) of the dispersion medium per 100 g of the conductive auxiliary agent, and
dc is a proportion (% by mass) of the conductive auxiliary agent to the total of the electrode active material and the conductive auxiliary agent in the slurry for forming an electrode.

[2] The slurry for forming an electrode according to [1], further comprising:
an electrolyte.
[3] The slurry for forming an electrode according to [1] or [2],
in which the expression (2) satisfies the following expression (2a),

$$\text{the expression (2a)} \qquad 0 \leq x \leq 21.$$

[4] The slurry for forming an electrode according to any one of [1] to [3],
in which the expression (4) satisfies the following expression (4a),

$$\text{the expression (4a)} \qquad \Delta E \leq 25.$$

[5] The slurry for forming an electrode according to any one of [1] to [4],
in which the surface free energy of the dispersion medium is 20 to 40 mN/m.
[6] The slurry for forming an electrode according to any one of [1] to [5],
in which the Sa is 10 to 21 mL.
[7] The slurry for forming an electrode according to any one of [1] to [6],
in which the Sc is 200 to 1,700 mL.
[8] The slurry for forming an electrode according to any one of [1] to [7],
in which a bulk density of the conductive auxiliary agent is 35 g/L or less.
[9] The slurry for forming an electrode according to any one of [1] to [8],
in which the conductive auxiliary agent is subjected to a surface treatment.
[10] The slurry for forming an electrode according to any one of [1] to [9], further comprising:
a dispersant.
[11] The slurry for forming an electrode according to any one of [1] to [10],
in which a content of the electrode active material is 45% by mass or more.
[12] The slurry for forming an electrode according to any one of [1] to [11],
in which a content of solid contents is more than 60% by mass.
[13] The slurry for forming an electrode according to any one of [1] to [12],
in which the electrode active material is a positive electrode active material.
[14] The slurry for forming an electrode according to any one of [1] to [13],
in which the proportion da of the electrode active material is 90.00% to 99.99% by mass, and the proportion dc of the conductive auxiliary agent is 0.01% to 10.00% by mass.
[15] A non-aqueous electrolytic solution secondary battery comprising, in the following order:

a positive electrode;
a separator; and
a negative electrode,
in which the slurry for forming an electrode according to [2] is used as a positive electrode active material layer and/or a negative electrode active material layer.

[16] A manufacturing method of a non-aqueous electrolytic solution secondary battery, comprising:
applying the slurry for forming an electrode according to any one of [1] to [14] onto an electrode collector to form an electrode active material layer.

In the description of the present invention, a numerical range represented by using "to" means a range including numerical values described before and after "to" as a lower limit value and an upper limit value.

In the present invention, "non-aqueous electrolytic solution" means an electrolytic solution which does not substantially contain water. That is, the "non-aqueous electrolytic solution" may contain a trace of water within a range that does not impair the effects of the present invention. The concentration of water in the "non-aqueous electrolytic solution" in the present invention is 200 ppm (based on mass) or less, preferably 100 ppm or less, and more preferably 20 ppm or less. The concentration of water is usually 1 ppm or more, because it is practically difficult to make an absolutely anhydrous non-aqueous electrolytic solution.

In the present invention, "non-aqueous solvent" also means a solvent which does not substantially contain water. That is, the "non-aqueous solvent" may contain a trace of water within a range that does not impair the effects of the present invention. The concentration of water in the "non-aqueous solvent" in the present invention is 200 ppm (based on mass) or less, preferably 100 ppm or less, and more preferably 20 ppm or less. The concentration of water is usually 1 ppm or more, because it is practically difficult to make an absolutely anhydrous non-aqueous solvent.

The slurry for forming an electrode of a non-aqueous electrolytic solution secondary battery according to the aspect of the present invention can a dispersion state even with the passage of time, can be quickly dried, and can form a uniform coating layer, and as a result, manufacturing suitability of the non-aqueous electrolytic solution secondary battery is excellent, and the obtained non-aqueous electrolytic solution secondary battery can be made to have more excellent performance. In the non-aqueous electrolytic solution secondary battery according to the aspect of the present invention, in a step of forming an electrode active material layer in the manufacturing method, a drying time can be shortened, a smooth electrode active material layer can be formed, and thus manufacturing suitability is high, and battery performance is also excellent. With the manufacturing method of a non-aqueous electrolytic solution secondary battery according to the aspect of the present invention, in a step of forming an electrode active material layer in the manufacturing method, it is possible to obtain a non-aqueous electrolytic solution secondary battery in which a drying time can be shortened, a smooth electrode active material layer can be formed, and thus manufacturing suitability is high, and battery performance is also excellent.

**BRIEF DESCRIPTION OF THE DRAWINGS**

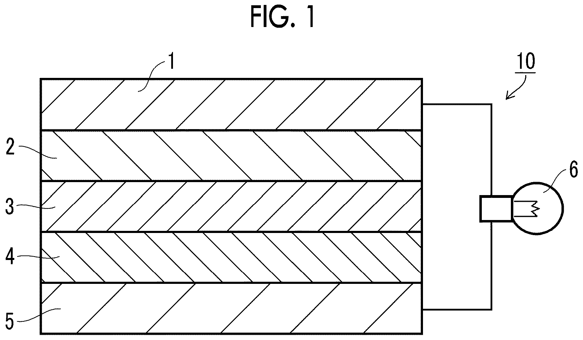

Fig. 1 is a longitudinal cross-sectional view schematically showing a basic lamination configuration of an embodiment of the secondary battery according to the present invention.

**DESCRIPTION OF THE PREFERRED EMBODIMENTS**

Preferred embodiments of the present invention will be described, but the present invention is not limited to these embodiments except as specified in the present invention.

[Slurry for forming electrode]

The slurry for forming an electrode according to the embodiment of the present invention (also referred to as "slurry according to the embodiment of the present invention") is a slurry containing an electrode active material, a conductive auxiliary agent, and a dispersion medium, and is a slurry suitable for forming an electrode active material layer of a non-aqueous electrolytic solution secondary battery.

The electrode active material may be a positive electrode active material or a negative electrode active material, and is more preferably a positive electrode active material. In a case where the slurry according to the embodiment of the present invention contains a positive electrode active material, the slurry according to the embodiment of the present invention can be used as a slurry for forming a positive electrode active material layer. In a case where the slurry according to the embodiment of the present invention contains a negative electrode active material, the slurry according to the embodiment of the present invention can be used as a slurry for forming a negative electrode active material layer.

As a preferred form (first form) of the slurry according to the embodiment of the present invention, the slurry according to the embodiment of the present invention is used as a slurry for forming an electrode of a general non-aqueous electrolytic solution secondary battery (non-aqueous electrolytic solution secondary battery which is not a semi-solid state secondary battery). In addition, as another preferred form (second form) of the present invention, the slurry according to the embodiment of the present invention is used as a slurry for forming an electrode of a semi-solid state secondary battery. The slurry for forming an electrode of the second form is different from that of the first form in that it contains an electrolyte (that is, the slurry contains an electrolytic solution obtained by adding an electrolyte to the dispersion medium).

The slurry according to the embodiment of the present invention satisfies the following expressions (1) to (4).

$$\text{Expression (1)} \quad 0 < y - x \leq 10$$

$$\text{Expression (2)} \quad 0 \leq x \leq 30$$

$$\text{Expression (3)} \quad S_{BET} \geq 170$$

$$\text{Expression (4)} \quad \Delta E \leq 30$$

x is a liquid absorption amount (mL) of the dispersion medium per 100 g of the total of the electrode active material and the conductive auxiliary agent in the slurry for forming an electrode, and is calculated by the following expression (5).
y is an amount (mL) of the dispersion medium per 100 g of the total of the electrode active material and the conductive auxiliary agent in the slurry for forming an electrode.
$S_{BET}$ is a BET specific surface area ($m^2/g$) of the conductive auxiliary agent.
$\Delta E$ is an absolute value (mN/m) of a difference between a surface free energy of the dispersion medium and a surface free energy of the conductive auxiliary agent.

$$\text{Expression (5)} \quad x = [Sa \times da/100] + [Sc \times dc/100]$$

Sa is a liquid absorption amount (mL) of the dispersion medium per 100 g of the electrode active material.
da is a proportion (% by mass) of the electrode active material to the total of the electrode active material and the conductive auxiliary agent in the slurry for forming an electrode.
Sc is a liquid absorption amount (mL) of the dispersion medium per 100 g of the conductive auxiliary agent.
dc is a proportion (% by mass) of the conductive auxiliary agent to the total of the electrode active material and the conductive auxiliary agent in the slurry for forming an electrode.

The slurry according to the embodiment of the present invention satisfies the expression (1) of $0 < y - x \leq 10$. That is, in the slurry according to the embodiment of the present invention, the amount y (mL) of the dispersion medium per 100 g of the total of the electrode active material and the conductive auxiliary agent is controlled to be in a predetermined range according to the liquid absorption amount x (mL) of the dispersion medium per 100 g of the total of the electrode active material and the conductive auxiliary agent, constituting the slurry. In the present invention, y - x may be referred to as an effective liquid amount.

Here, in the present invention, the "liquid absorption amount of the dispersion medium per 100 g of the total of the electrode active material and the conductive auxiliary agent" means the amount of the dispersion medium which can be retained in a structure of 100 g of a mixture obtained by mixing the electrode active material species and the conductive auxiliary agent species present in the slurry at the same proportion as the content ratio in the slurry.
x can be determined by the expression (5). In the expression (5), a method of determining the liquid absorption amount Sa of the dispersion medium per 100 g of the electrode active material and the liquid absorption amount Sc of the dispersion medium per 100 g of the conductive auxiliary agent will be described later.

In a case where the amount y of the dispersion medium is too small with respect to the above-described liquid absorption amount x (y - x > 10), an amount of a solvent volatilized during the formation of the electrode active material layer by applying the slurry and the drying of the slurry is large, and thus voids and the like are likely to be generated in the electrode active material layer. As a result, a volume energy density is reduced. In addition, in a case where the slurry is applied to form the electrode active material layer, the excess dispersion medium flows out from the end part, which also leads to a decrease in smoothness of the electrode active material layer.

With regard to the expression (1), the slurry according to the embodiment of the present invention preferably satisfies the following expression (1a), more preferably satisfies the following expression (1b), still more preferably satisfies the following expression (1c), and even more preferably satisfies the following expression (1d).

$$\text{Expression (1a)} \quad 1.0 \leq y - x \leq 10$$

$$\text{Expression (1b)} \quad 3.0 \leq y - x \leq 10$$

$$\text{Expression (1c)} \quad 6.0 \leq y - x \leq 10$$

$$\text{Expression (1d)} \quad 7.0 \leq y - x \leq 9.0$$

In the slurry according to the embodiment of the present invention, the liquid absorption amount x of the dispersion medium per 100 g of the total of the electrode active material and the conductive auxiliary agent satisfies the expression (2) of $0 \leq x \leq 30$. That is, the total liquid absorption amount with the electrode active material and the conductive auxiliary agent is controlled within a predetermined range. By setting the liquid absorption amount x within the above-described range, the amount of the dispersion medium contained in the slurry according to the embodiment of the present invention can be suppressed.

With regard to the expression (2), the slurry according to the embodiment of the present invention preferably satisfies the following expression (2a), more preferably satisfies the following expression (2b), still more preferably satisfies the following expression (2c), and particularly preferably satisfies the following expression (2d).

$$\text{Expression (2a)} \quad 0 \leq x \leq 21$$

$$\text{Expression (2b)} \quad 7 \leq x \leq 18$$

$$\text{Expression (2c)} \quad 8 \leq x \leq 18$$

$$\text{Expression (2d)} \quad 10 \leq x \leq 16$$

The liquid absorption amount (Sa or Sc) of the dispersion medium per 100 g of each of the electrode active material and the conductive auxiliary agent can be determined as follows in accordance with JIS 6217-4: 2017.

-Liquid absorption amount measuring method-

An oil absorption amount measuring device (S-500 (trade name), manufactured by Asahisouken) is used for measuring the liquid absorption amount. 0.5 g of the dispersion medium constituting the slurry is added dropwise to 15 g of a powder of the electrode active material or the dispersion aid, and a value is obtained to measure the amount (mL) of the dispersion medium added at which the torque is maximized (maximum). Based on the obtained value, the liquid absorption amount per 100 g of the powder is calculated.

In a case where the slurry according to the embodiment of the present invention contains a mixed solvent as the dispersion medium, the above-described liquid absorption amount is measured by using the mixed solvent as the "dispersion medium constituting the slurry". In a case where the slurry according to the embodiment of the present invention is a slurry for forming an electrode for a semi-solid state secondary battery, the dispersion medium (solvent excluding a solute) constituting the non-aqueous electrolytic solution used for preparing the slurry is used for the above-described measurement.

In the expression (5), the liquid absorption amount Sa of the dispersion medium per 100 g of the electrode active material is preferably 10 to 21 mL, more preferably 10 to 18 mL, still more preferably 10 to 15 mL, and even more preferably 11 to 15 mL.

The liquid absorption amount Sc of the dispersion medium per 100 g of the conductive auxiliary agent is preferably 200 to 1,700 mL, more preferably 200 to 1,500 mL, still more preferably 350 to 1,500 mL, and even more preferably 450 to 1,400 mL. The liquid absorption amount Sc can be 700 to 1,500 mL, 800 to 1,500 mL, or 900 to 1,500 mL.

The proportion da of the electrode active material to the total of the electrode active material and the conductive auxiliary agent in the slurry for forming an electrode is preferably 90.00% to 99.99% by mass, preferably 95.00% to 99.99% by mass, preferably 97.00% to 99.95% by mass, and more preferably 98.00% to 99.90% by mass.

The proportion dc of the conductive auxiliary agent to the total of the electrode active material and the conductive auxiliary agent in the slurry for forming an electrode is preferably 0.01% to 10.00% by mass, more preferably 0.01% to 5.00% by mass, and still more preferably 0.10% to 2.00% by mass. The proportion dc of the conductive auxiliary agent can also be set to 0.10% to 1.00% by mass.

The liquid absorption amount of each of the electrode active material and the conductive auxiliary agent can be appropriately controlled by the formulation, the average particle diameter, the BET specific surface area, the bulk density, the surface treatment, and the like.

The slurry according to the embodiment of the present invention satisfies the expression (3) of $S_{BET} \geq 170$ for the conductive auxiliary agent. That is, in the slurry according to the embodiment of the present invention, a conductive auxiliary agent having a relatively large BET specific surface area ($m^2/g$) is used.

The $S_{BET}$ of the conductive auxiliary agent preferably satisfies the following expression (3a), more preferably satisfies the following expression (3b), still more preferably satisfies the following expression (3c), and even more preferably satisfies the following expression (3d).

$$\text{Expression (3a)} \quad S_{BET} \geq 300$$

$$\text{Expression (3b)} \quad S_{BET} \geq 500$$

$$\text{Expression (3c)} \quad S_{BET} \geq 700$$

$$\text{Expression (3d)} \quad S_{BET} \geq 800$$

The upper limit of the $S_{BET}$ is not particularly limited, but is practically 1,500 $m^2/g$. Therefore, the $S_{BET}$ of the conductive auxiliary agent preferably satisfies the following expression (3e), more preferably satisfies the following expression (3f), still more preferably satisfies the following expression (3g), and even more preferably satisfies the following expression (3h).

$$\text{Expression (3e)} \quad 1500 \geq S_{BET} \geq 300$$

$$\text{Expression (3f)} \quad 1500 \geq S_{BET} \geq 500$$

$$\text{Expression (3g)} \quad 1500 \geq S_{BET} \geq 700$$

$$\text{Expression (3h)} \quad 1500 \geq S_{BET} \geq 800$$

In a case where the conductive auxiliary agent has the above-described large BET specific surface area, a surface of the conductive auxiliary agent is rich in unevenness, and a favorable conductive network formed of the conductive auxiliary agent can be formed even in a case where the addition amount of the conductive auxiliary agent is reduced, and thus the output characteristics can be improved in a case of being used in a battery. Therefore, it is possible to reduce the addition amount of the conductive auxiliary agent. On the other hand, the conductive auxiliary agent having the large BET specific surface area tends to induce aggregation of solid particles. In the present invention, this point is dealt with by controlling the slurry so as to satisfy the expression (4).

The $S_{BET}$ of the conductive auxiliary agent can be measured by a BET method as follows.

-BET specific surface area measuring method-

0.2 g of the conductive auxiliary agent is dried at 120°C for 6 hours, and then measured under the following measurement conditions using BELSORP mini (trade name) manufactured by MicrotracBEL Corp.

· Adsorption temperature: 77 K
· Adsorbed gas: $N_2$
· Equilibrium time: 100 seconds
· Purge gas: He

The slurry according to the embodiment of the present invention satisfies the expression (4) of $\Delta E \leq 30$ (mN/m). In a case where the absolute value ($\Delta E$) of the difference between the surface free energy ($E_d$) of the dispersion medium and the surface free energy ($E_c$) of the conductive auxiliary agent is within the above-described range, wettability (affinity) between the dispersion medium and the conductive auxiliary agent is high. As a result, it is considered that the dispersion medium is likely to permeate into the particle aggregate formed by the action of the conductive auxiliary agent, and thus an interparticle interaction is reduced, which makes it possible to reduce the viscosity of the slurry.

The expression (4) preferably satisfies the following expression (4a).

$$\text{Expression (4a)} \quad \Delta E \leq 25$$

The lower limit of $\Delta E$ is not particularly limited, but is preferably $2 \leq \Delta E$.

$\Delta E$ is preferably $10 \leq \Delta E \leq 30$, more preferably $15 \leq \Delta E \leq 30$, and still more preferably $20 \leq \Delta E \leq 30$. In addition, $\Delta E$ is also preferably $10 \leq \Delta E \leq 25$, preferably $15 \leq \Delta E \leq 25$, and preferably $20 \leq \Delta E \leq 25$.

The surface free energy ($E_d$) of the dispersion medium is preferably 10 to 80 mN/m, more preferably 10 to 60 mN/m, and still more preferably 20 to 40 mN/m.

The surface free energy of the dispersion medium can be controlled by selecting the dispersion medium species, combining the dispersion medium species, and adding a dispersant for the electrode active material and the conductive auxiliary agent, which will be described later.

The surface free energy ($E_c$) of the conductive auxiliary agent is preferably 3 to 50 mN/m, more preferably 3.5 to 30 mN/m, still more preferably 4.0 to 20 mN/m, even more preferably 7.0 to 20 mN/m, and even still more preferably 16 to 20 mN/m.

The surface free energy of the conductive auxiliary agent can be controlled by the surface treatment and the like.

The surface free energy of the dispersion medium and the surface free energy of the conductive auxiliary agent described above can be calculated as follows.

<Surface free energy measuring method>

1) Surface free energy of conductive auxiliary agent

The surface free energy of the conductive auxiliary agent can be determined by a permeation rate method. The details are as described below.

The measurement is performed using a tensiometer (device name: DY-700 (trade name), manufactured by Kyowa Interface Science Co., Ltd.) and a powder contact angle measuring kit. 2.0 g of a powder of the conductive auxiliary agent is packed in a cylinder having an inner diameter of 1 cm (cross-sectional area S: 0.785 cm$^2$), and the powder is compressed and filled using a cylindrical rod having the same diameter as the inner diameter of the cylinder. The above-described cylinder is set on the above-described powder contact angle measuring kit, the powder in the cylinder is permeated with each of three kinds of solvents (hexadecane, ethylene glycol, and bromonaphthalene) for 5 minutes (time $t$ = 300 seconds), a permeation weight $W_L$ (g) of each solvent is measured, and $W_L^2/t$ is calculated.

The $W_L^2/t$ of each solvent obtained as described above is substituted into the following Washburn's equation together with the following liquid density $\rho_L$, the following liquid surface tension $\gamma_L$, and the following liquid viscosity $\eta_L$, and a contact angle $\cos\theta$ of each solvent is calculated as follows.

The liquid density $\rho_L$, the liquid surface tension $\gamma_L$, and the liquid viscosity $\eta_L$ of the above-described three solvents are set to the following constants with reference to the values in the literature.

Hexadecane: $\rho_L$ = 0.775 g/mL, $\gamma_L$ = 27.6 mN/m, $\eta_L$ = 3.5 mPa·s
Ethylene glycol: $\rho_L$ = 1.11 g/mL, $\gamma_L$ = 47.7 mN/m, $\eta_L$ = 2 mPa·s
Bromonaphthalene: $\rho_L$ = 1.48 g/mL, $\gamma_L$ = 44.6 mN/m, $\eta_L$ = 2.3 mPa·s

$$\text{Washburn's equation}$$

$$\frac{W_L^2}{t} = (S \cdot \varepsilon \cdot \rho_L)^2 \frac{r \cdot \gamma_L \cdot \cos\theta}{2\eta}$$

$W_L$: permeation weight
$t$: time
$S$: cell (powder layer filling portion) cross-sectional area
$\varepsilon$: void ratio
$\rho_L$: liquid density
$r$: capillary radius formed by particles in powder layer
$\gamma_L$: liquid surface tension
$\eta_L$: liquid viscosity

θ: contact angle between liquid and surface of solid

Assuming that the contact angle of the most well-wetted solvent among the above-described three solvents is 0°, $\varepsilon^2 r$ is determined by substituting the $W_L^2/t$ calculated from the measured permeation weight $W_L$ and the permeation time t into the Washburn's equation. Here, the $\varepsilon^2 r$ is a constant determined by the type of the powder (the unit of r in the above-described Washburn's equation is "m", and the void ratio $\varepsilon$ is a value in a range of 0.0 to 1.0).

The $W_L^2/t$ of each solvent calculated from the measured weight and the permeation time of the other two solvents and $\varepsilon^2 r$ obtained above are substituted into the Washburn's equation, and $\cos\theta$ is derived for each solvent.

The $\cos\theta$ of the two solvents obtained as described above, and a dispersion component and a polar component of the surface free energy determined from the values in the literature are substituted into the following Fowkes' equation regarding the components of the contact angle; and binary simultaneous equations regarding the dispersion component Y = $\gamma_{SV}^d$ and the polar component X = $\gamma_{SV}^h$ of the surface free energy of the powder are solved to obtain the dispersion component and the polar component of the surface free energy of the powder.

As the surface free energy of each of the above-described solvents, each constant described in Journal of the Adhesion Society of Japan, 8, 131 (1972) is used. The dispersion component ($\gamma_{LV}^d$), the polar component ($\gamma_{LV}^h$), and the sum ($\gamma_L$) of the dispersion component and the polar component of the surface free energy of each solvent are as follows.

Hexadecane: $\gamma_{LV}^d$ = 27.6 mN/m, $\gamma_{LV}^h$ = 0.0 mN/m, $\gamma_L$ = 27.6 mN/m
Ethylene glycol: $\gamma_{LV}^d$ = 29.4 mN/m, $\gamma_{LV}^h$ = 18.3 mN/m, $\gamma_L$ = 47.7 mN/m
Bromonaphthalene: $\gamma_{LV}^d$ = 44.4 mN/m, $\gamma_{LV}^h$ = 0.2 mN/m, $\gamma_L$ = 44.6 mN/m

The above operation (measurement of permeation weight) is performed four times (N = 4), and each average value of the dispersion components and the polar components is obtained. The sum of the average value Y of the dispersion components and the average value X of the polar components obtained is defined as the surface free energy (mN/m) of the powder. For the calculation of the surface free energy of the powder, analysis software DYNALYZER was used.

Fowkes' equation

$$\sqrt{\gamma_{SV}^d \gamma_{LV}^d} + \sqrt{\gamma_{SV}^h \gamma_{LV}^h} = \frac{\gamma_L(1+\cos\Theta)}{2}$$

$\gamma_{SV}^d$: dispersion component (between powder and gas) of surface free energy of powder (mN/m)
$\gamma_{LV}^d$: dispersion component (between liquid and gas) of surface free energy of liquid (solvent) (mN/m)
$\gamma_{SV}^h$: polar component (between powder and gas) of surface free energy of powder (mN/m)
$\gamma_{LV}^h$: polar component (between liquid and gas) of surface free energy of liquid (solvent) (mN/m)
$\gamma_L$: $\gamma_{LV}^d$ + $\gamma_{LV}^h$, sum (mN/m) of dispersion component and polar component of surface free energy of liquid

2) Surface free energy of dispersion medium

The measurement is performed by Wilhelmy method using a tensiometer (device name: DY-700 (trade name), manufactured by Kyowa Interface Science Co., Ltd.). Specifically, a platinum plate (circumference length L: 0.03 m) is brought into contact with the dispersion medium, a tension F (mN) applied to the plate and a contact angle θ between the platinum plate and the dispersion medium are measured, and a surface free energy γ (mN/m) is determined by the following expression.

$$\gamma = F/L\cos\theta$$

The above-described operation is performed four times, and an average value of the obtained measured values is defined as the surface free energy (mN/m) of the dispersion medium. For the calculation, analysis software DYNALYZER is used.

In a case where the slurry contains a dispersant, the surface free energy of the dispersion medium is measured using a dispersant obtained by dissolving the dispersant at the same concentration as that of the slurry.

As described above, in the slurry according to the embodiment of the present invention, a conductive auxiliary agent having a relatively large specific surface area is used, the amount of the dispersion medium is limited to be small in consideration of the liquid absorption amount of the electrode active material and the conductive auxiliary agent, and the relationship between the surface free energy of the conductive auxiliary agent and the surface free energy of the dispersion medium is controlled. As a result, the liquid amount in the slurry can be reduced, and thus the dispersion stability is further improved, and a smoother electrode can be formed even though the slurry has a high concentration of the conductive auxiliary agent having a predetermined high specific surface area of the conductive auxiliary agent, which contributes to the improvement of the manufacturing efficiency and quality of the battery from the viewpoint of the formation of the electrode active material layer.

In the slurry according to the embodiment of the present invention, a content of the electrode active material in the slurry is preferably 45% by mass or more, more preferably 60% by mass or more, still more preferably 65% by mass or more, even more preferably 70% by mass or more, and even still more preferably 78% by mass or more.

In the slurry according to the embodiment of the present invention, a content of solid contents (components other than the dispersion medium (solvent)) in the slurry is preferably more than 60% by mass, more preferably 65% by mass or more, and still more preferably 70% by mass or more. The content of the solid contents is preferably 60% to 95% by mass, more preferably 65% to 92% by mass, still more preferably 70% to 90% by mass, even more preferably 72% to 88% by mass, and particularly preferably 75% to 85% by mass.

Each component constituting the slurry according to the embodiment of the present invention will be described in detail.

<Electrode active material>

(Positive electrode active material)

As the positive electrode active material, a positive electrode active material capable of reversibly intercalating and deintercalating lithium ions is preferable. The material is not particularly limited as long as the material has the above-described characteristics, and may be transition metal oxides, organic matter, elements capable of being complexed with Li, such as sulfur, complexes of sulfur and metal, or the like.

Among these, as the positive electrode active material, lithium-containing transition metal oxides are preferably used, and lithium-containing transition metal oxides having a transition metal element $M^a$ (one or more elements selected from Co, Ni, Fe, Mn, Cu, and V) are more preferable. In addition, an element $M^b$ (an element of Group 1 (Ia) of the periodic table other than lithium, an element of Group 2 (IIa), or an element such as Al, Ga, In, Ge, Sn, Pb, Sb, Bi, Si, P, and B) may be mixed into the lithium-containing transition metal oxide. The mixed amount is preferably 0 to 30 mol% with respect to the amount (100 mol%) of the transition metal element $M^a$. It is more preferable that the transition metal oxide is synthesized by mixing the above-described components such that a molar ratio Li/Ma is 0.3 to 2.2.

Specific examples of the lithium-containing transition metal oxide include (MA) transition metal oxides having a bedded salt-type structure, (MB) transition metal oxides having a spinel-type structure, (MC) lithium-containing transition metal phosphoric acid compounds, (MD) lithium-containing transition metal halogenated phosphoric acid compounds, and (ME) lithium-containing transition metal silicate compounds.

Specific examples of the transition metal oxide having a bedded salt-type structure (MA) include $LiCoO_2$ (lithium cobalt oxide [LCO]), $LiNi_2O_2$ (lithium nickelate), $LiNi_{0.85}Co_{0.10}Al_{0.05}O_2$ (lithium nickel cobalt aluminum oxide [NCA]), $LiNi_{1/3}Co_{1/3}Mn_{1/3}O_2$ (lithium nickel manganese cobalt oxide [NMC]), and $LiNi_{0.5}Mn_{0.5}O_2$ (lithium manganese nickelate).

Specific examples of the transition metal oxide having a spinel-type structure (MB) include $LiMn_2O_4$ (LMO), $LiCoMnO_4$, $Li_2FeMn_3O_8$, $Li_2CuMn_3O_8$, $Li_2CrMn_3O_8$, and $Li_2NiMn_3O_8$.

Examples of the lithium-containing transition metal phosphoric acid compound (MC) include olivine-type iron phosphate salts such as $LiFePO_4$ and $Li_3Fe_2(PO_4)_3$; cobalt phosphates such as $LiCoPO_4$; iron pyrophosphates such as $LiFeP_2O_7$; and monoclinic NASICON-type vanadium phosphate salts such as $Li_3V_2(PO_4)_3$ (lithium vanadium phosphate).

Examples of the lithium-containing transition metal halogenated phosphoric acid compound (MD) include iron fluorophosphates such as $Li_2FePO_4F$, manganese fluorophosphates such as $Li_2MnPO_4F$, and cobalt fluorophosphates such as $Li_2CoPO_4F$.

Examples of the lithium-containing transition metal silicate compound (ME) include $Li_2FeSiO_4$, $Li_2MnSiO_4$, and $Li_2CoSiO_4$.

In the present invention, the positive electrode active material is preferably the lithium-containing transition metal phosphoric acid compound (MC), and more preferably $LiFePO_4$.

A shape of the positive electrode active material is not particularly limited, but is preferably a particulate shape.

An average particle diameter (sphere-equivalent average particle diameter) of the positive electrode active material is not particularly limited. For example, the average particle diameter can be 0.1 to 50 $\mu$m, preferably 0.2 to 30 $\mu$m, more preferably 0.5 to 20 $\mu$m, and still more preferably 0.8 to 10 $\mu$m.

In order to allow the positive electrode active material to have a predetermined particle diameter, a typical pulverizer or classifier may be used. A positive electrode active material obtained using a baking method may be used after being washed with water, an acidic aqueous solution, an alkaline aqueous solution, or an organic solvent.

In a case where a commercially available positive electrode active material is used, the average particle diameter of the positive electrode active material is adopted as the value described in the catalog of the manufacturer.

In a case where the information on the average particle diameter of the manufacturer cannot be obtained or in a case where a synthesized positive electrode active material is used, the average particle diameter value (volume-based median diameter D50 in water) obtained by dispersing the positive electrode active material in water and measuring the average particle diameter with a laser diffraction/scattering-type particle size distribution analyzer (for example, Particle LA-960V2 manufactured by HORIBA, Ltd.) is adopted. The same applies to an average particle diameter of solid particles other than the positive electrode active material.

A chemical formula of a compound obtained by the above-described baking method can be calculated using an inductively coupled plasma (ICP) emission spectroscopy as a measuring method from the mass difference of powder before and after baking as a convenient method.

A surface of the positive electrode active material may be coated with an oxide such as another metal oxide and a carbon-based material.

Examples of a surface coating material include a metal oxide containing Ti, Nb, Ta, W, Zr, Al, Si, or Li. Examples thereof include titanium oxide spinel, tantalum-based oxides, niobium-based oxides, and lithium niobate-based compounds; and specific examples thereof include $Li_4Ti_5O_{12}$, $Li_2Ti_2O_5$, $LiTaO_3$, $LiNbO_3$, $LiAlO_2$, $Li_2ZrO_3$, $Li_2WO_4$, $Li_2TiO_3$, $Li_2B_4O_7$, $Li_3PO_4$, $Li_2MoO_4$, $Li_3BO_3$, $LiBO_2$, $Li_2CO_3$, $Li_2SiO_3$, $SiO_2$, $TiO_2$, $ZrO_2$, $Al_2O_3$, $B_2O_3$, and $Li_3AlF_6$. In addition, a carbon-based material such as C, SiC, and SiOC (carbon-added silicon oxide) can also be used as the surface coating material.

From the viewpoint of increasing electron conductivity to a desired level, the positive electrode active material may be coated with the carbon-based material. It is preferable that the surface of the positive electrode active material is coated with carbon (C). The surface coating with carbon can be formed by firing the positive electrode active material in the presence of an additive (organic substance) serving as a carbon source. As the additive, for example, a styrene-maleic acid anhydride copolymer, polystyrene, polycarbonate, or the like can be used.

In addition, the surface of the positive electrode active material may be subjected to a surface treatment with sulfur or phosphorus.

Furthermore, a surface treatment may be carried out on surfaces of particles of the positive electrode active material with an actinic ray or an active gas (plasma or the like) before or after the coating of the surfaces.

One kind of the above-described positive electrode active material may be used alone, or two or more kinds thereof may be used in combination.

In a case of forming the positive electrode active material layer, a mass (mg) of the positive electrode active material per unit area ($cm^2$) of the positive electrode active material layer (mass per unit area) is not particularly limited. The mass per unit area can be appropriately determined depending on the designed battery capacity.

(Negative electrode active material)

As the negative electrode active material, a positive electrode active material capable of reversibly absorbing and deintercalating lithium ions is preferable. The material is not particularly limited as long as the material has the above-described characteristics, and examples thereof include a carbonaceous material, a silicon-based material, a metal oxide, a metal composite oxide, lithium, a lithium alloy, and a negative electrode active material capable of forming an alloy with lithium. Among these, in view of reliability, a carbonaceous material or a silicon-based material is preferably used.

The carbonaceous material used as the negative electrode active material is a material substantially consisting of carbon. Examples thereof include carbon black such as petroleum pitch, graphite (natural graphite and artificial graphite such as vapor-grown graphite), and carbonaceous material obtained by baking various synthetic resins such as a polyacrylonitrile (PAN)-based resin and a furfuryl alcohol resin. Furthermore, examples thereof also include various carbon fibers such as PAN-based carbon fiber, cellulose-based carbon fiber, pitch-based carbon fiber, vapor-grown carbon fiber, dehydrated polyvinyl alcohol (PVA)-based carbon fiber, lignin carbon fiber, vitreous carbon fiber, and activated carbon fiber; mesophase microspheres, graphite whisker, and tabular graphite.

The metal oxide and the metal composite oxide, used as the negative electrode active material, are not particularly limited as long as they are oxides capable of absorbing and deintercalating lithium, and are preferably amorphous oxides. Preferred examples thereof also include chalcogenide which is a reaction product of a metal element and a Group 16 element of the periodic table. The "noncrystalline" herein means an oxide having a broad scattering band with an apex in a range of 20° to 40° in terms of the $2\theta$ value in case of being measured by an X-ray diffraction method using a $CuK\alpha$ ray, and the oxide may have a crystalline diffraction line.

In the compound group consisting of the noncrystalline oxides and the chalcogenides described above, the noncrystalline oxide of a metalloid element or the above-described chalcogenide is more preferable; and an oxide consisting of one element or a combination of two or more elements selected from elements (Al, Ga, Si, Sn, Ge, Pb, Sb, and Bi) of Group 13 (IIIB) to Group 15 (VB) of the periodic table or the chalcogenide is particularly preferable. Specific examples of the preferred noncrystalline oxide and chalcogenide preferably include $Ga_2O_3$, $GeO$, $PbO$, $PbO_2$, $Pb_2O_3$, $Pb_2O_4$, $Pb_3O_4$, $Sb_2O_3$, $Sb_2O_4$, $Sb_2O_8Bi_2O_3$, $Sb_2O_8Si_2O_3$, $Sb_2O_5$, $Bi_2O_3$, $Bi_2O_4$, $GeS$, $PbS$, $PbS_2$, $Sb_2S_3$, and $Sb_2S_5$.

From the viewpoint of charge and discharge characteristics at a high current density, it is preferable that the metal (composite) oxide and the chalcogenide contain at least one of titanium or lithium as a constitutional component. Examples of the metal composite oxide (lithium composite metal oxide) including lithium include a composite oxide of lithium oxide and the above metal (composite) oxide or the above chalcogenide, and specifically, $Li_2SnO_2$.

It is also preferable that the negative electrode active material contains a titanium atom. More specifically, $TiNb_2O_7$ (niobium titanium oxide [NTO]) or $Li_4Ti_5O_{12}$ (lithium titanate [LTO]), which goes through a slight volume change in absorbing and deintercalating lithium ions, is preferable because these compounds exhibit excellent high-speed charging and discharging characteristics, suppress the deterioration of an electrode, and can increase the life of a lithium ion secondary battery.

The lithium alloy as the negative electrode active material is not particularly limited as long as it is typically used as a negative electrode active material for a secondary battery, and examples thereof include a lithium aluminum alloy.

The negative electrode active material capable of forming an alloy with lithium is not particularly limited as long as it is typically used as a negative electrode active material for a secondary battery. Examples of such an active material include negative electrode active materials having a silicon atom or a tin atom, and respective metals such as Al, In, and the like; and a negative electrode active material having a silicon atom which achieves a higher battery capacity (silicon atom-containing active materials) is preferable, and a silicon atom-containing active material having a silicon atom content of 40 mol% or more of all constituent atoms is more preferable.

Generally, a negative electrode containing these negative electrode active materials (for example, an Si negative electrode containing a silicon atom-containing active material and an Sn negative electrode containing a tin atom-containing active material) can absorb a larger amount of Li ions than carbon negative electrodes (such as graphite and acetylene black). That is, the amount of Li ions absorbed per unit mass increases. Therefore, the battery capacity (energy density) can be increased. As a result, there is an advantage in that the battery driving duration can be extended.

Examples of the silicon atom-containing active material include a silicon material such as Si and $SiOx$ ($0 < x \leq 1$), an alloy containing titanium, vanadium, chromium, manganese, nickel, copper, or lanthanum (for example, $LaSi_2$ and $VSi_2$), a structured active material (for example, $LaSi_2/Si$), and an active material containing a silicon atom and a tin atom, such as $SnSiO_3$ and $SnSiS_3$. Since $SiOx$ itself can be used as the negative electrode active material (the metalloid oxide) and Si is produced along with the operation of the battery, $SiO_x$ can be used as an active material (or a precursor material thereof) capable of forming an alloy with lithium.

Examples of the negative electrode active materials having a tin atom include Sn, SnO, $SnO_2$, SnS, $SnS_2$, and active materials containing the above-described silicon atom and a tin atom. In addition, examples thereof include a composite oxide with lithium oxide, for example, $Li_2SnO_2$.

In the present invention, the negative electrode active material is preferably a carbonaceous material and more preferably artificial graphite.

A shape of the negative electrode active material is not particularly limited, but is preferably a particle shape.

An average particle diameter (sphere-equivalent average particle diameter) of the negative electrode active material is preferably 0.1 to 60 $\mu$m, for example, preferably 0.5 to 50 $\mu$m, more preferably 1.0 to 40 $\mu$m, and still more preferably 5.0 to 30 $\mu$m.

In order to have a predetermined particle diameter, a typical pulverizer or classifier is used. For example, a mortar, a ball mill, a sand mill, a vibratory ball mill, a satellite ball mill, a planetary ball mill, a vortex airflow-type jet mill, a sieve, or the like is suitably used. During the pulverization, wet pulverization of causing water or an organic solvent such as methanol to coexist with the negative electrode active material can be performed. In order to provide the desired particle diameter, classification is preferably performed. The classification method is not particularly limited, and a sieve, an air classifier, or the like can be used as desired. Both a dry-type classification and a wet-type classification can be used.

One kind of the above-described negative electrode active material may be used alone, or two or more kinds thereof may be used in combination.

In a case of forming the negative electrode active material layer, a mass (mg) of the negative electrode active material per unit area ($cm^2$) of the negative electrode active material layer (mass per unit area) is not particularly limited. The mass per unit area can be appropriately determined depending on the designed battery capacity.

A chemical formula of a compound obtained by the above-described baking method can be calculated using an inductively coupled plasma (ICP) emission spectroscopy as a measuring method from the mass difference of powder before and after baking as a convenient method.

<Conductive auxiliary agent>

The conductive auxiliary agent is not particularly limited as long as it satisfies the above expression (3), a conductive auxiliary agent which is known as a general conductive auxiliary agent can be used. For example, the conductive auxiliary agent may be graphite such as natural graphite and artificial graphite; carbon black such as acetylene black, ketjen black, and furnace black; irregular carbon such as needle cokes; a carbon fiber such as vapor-grown carbon fiber and carbon nanotube; a carbonaceous material such as graphene and fullerene which are electron-conductive materials; metal powder or a metal fiber of copper, nickel, or the like; and a conductive polymer such as polyaniline, polypyrrole, polythiophene, polyacetylene, and a polyphenylene derivative.

In the present invention, the conductive auxiliary agent is preferably a carbonaceous material, and more preferably acetylene black or ketjen black.

In a case where the positive electrode active material and the conductive auxiliary agent are used in combination, among the above-described conductive auxiliary agents, a conductive auxiliary agent which does not intercalate and deintercalate Li and does not function as an active material at the time of charging and discharging a battery is regarded as the conductive auxiliary agent. Therefore, among the conductive auxiliary agents, a conductive auxiliary agent which can function as the active material in the active material layer at the time of charging and discharging of the battery is classified as the active material, not as the conductive auxiliary agent. Whether or not the conductive auxiliary agent functions as the active material at the time of charging and discharging of the battery is not unambiguously determined, and determined by a combination with the active material.

Examples of a commercially available product of the conductive auxiliary agent include the following.

Ketjen black: Carbon ECP (BET specific surface area = 890 $m^2/g$), Carbon ECP600JD (BET specific surface area = 1480 $m^2/g$), Carbon ECP200L (BET specific surface area = 430 $m^2/g$) (all manufactured by LION SPECIALTY CHEMICALS CO., LTD.)

Carbon black: LITX300 (BET specific surface area = 180 $m^2/g$), PBX09 (BET specific surface area = 230 $m^2/g$), PBX51 (BET specific surface area = 1350 $m^2/g$), LITXmax90 (BET specific surface area = 1400 $m^2/g$) (all manufactured by Cabot Corporation)

CNT: BT1001M (BET specific surface area = 272 $m^2/g$), BT1003M (BET specific surface area = 230 $m^2/g$) (both of LG CHEM.)

One kind of conductive auxiliary agent or two or more kinds of conductive auxiliary agents may be used.

A shape of the conductive auxiliary agent is not particularly limited, and is preferably a particulate shape.

An average particle diameter (sphere-equivalent average particle diameter) of the conductive auxiliary agent is not particularly limited. For example, the average particle diameter is preferably 0.01 to 50 $\mu$m, more preferably 0.1 to 10 $\mu$m, and still more preferably 0.2 to 2.0 $\mu$m.

A bulk density (g/L) of the conductive auxiliary agent is not particularly limited. For example, the bulk density is preferably 40 g/L or less, and more preferably 35 g/L or less. The lower limit thereof is not particularly limited, but is practically 10 g/L or more. Therefore, the bulk density of the conductive auxiliary agent is preferably 10 to 40 g/L and more preferably 10 to 35 g/L. The bulk density can also be set to 20 to 35 g/L.

The bulk density of the conductive auxiliary agent can be measured as follows.

-Bulk density measuring method-

5 g of the sample is gently placed in a 250 mL graduated cylinder. The upper surface of the powder layer is leveled without being compacted, and a bulk volume (mL) is read to the minimum scale unit. The bulk density (g/mL) is calculated by dividing a sample weight (g) by the bulk volume. The trial is repeated three times, and an average value thereof is defined as the bulk density of the conductive auxiliary agent.

The conductive auxiliary agent may be subjected to a surface treatment. By performing the surface treatment, the surface free energy can be controlled.

A method of the surface treatment is not particularly limited, and a surface treatment using a chemical treatment agent or an atomic layer deposition (ALD) treatment is preferable.

As the chemical treatment agent, an organic silicon compound (more preferably a silane coupling agent), an organic phosphonic acid compound, or the like is preferable; and examples thereof include methyltrimethoxysilane (MTMS), octadecyltrimethoxysilane, hexamethyldisilazane, tetraethoxysilane, trifluoropropyltrimethoxysilane, vinyltrimethoxysilane, phenyltrimethoxysilane, 3-aminopropyltriethoxysilane, 1H,1H,2H,2H-perfluorooctyltriethoxysilane, trimethoxy(octyl)silane, 1H,1H,2H,2H-perfluorooctane phosphonic acid, 1-octyl phosphonic acid, and perfluoropolyether triethoxysilane (KY1903 (trade name)).

In the ALD treatment, examples of a layer to be deposited include $HfO_2$, $SiO_2$, $ZrO_2$, $Ta_2O_5$, and $TiO_2$.

<Dispersion medium>

In the first form (the slurry for forming an electrode of a general non-aqueous electrolytic solution secondary battery), the dispersion medium may be water or a non-aqueous solvent. In the second form (the slurry for forming an electrode of a semi-solid state secondary battery), water is not used, and a non-aqueous solvent is used.

As the non-aqueous solvent, aprotic organic solvents are preferable, and among these, an aprotic organic solvent having 2 to 10 carbon atoms is more preferable.

Examples of such a non-aqueous solvent include a chain-like or cyclic carbonate compound, a lactone compound, a chain-like or cyclic ether compound, an ester compound, a nitrile compound, an amide compound, an oxazolidinone compound, a nitro compound, a chain-like or cyclic sulfone or sulfoxide compound, and a phosphoric acid ester compound.

A compound having an ether bond, a carbonyl bond, an ester bond, or a carbonate bond is preferable. These compounds may have a substituent.

Examples of the non-aqueous solvent include ethylene carbonate, fluorinated ethylene carbonate, vinylene carbonate, propylene carbonate, butylene carbonate, dimethyl carbonate, diethyl carbonate, ethyl methyl carbonate, methyl propyl carbonate, $\gamma$-butyrolactone, $\gamma$-valerolactone, 1,2-dimethoxyethane, tetrahydrofuran, 2-methyltetrahydrofuran, tetrahydropyran, 1,3-dioxolane, 4-methyl-1,3-dioxolane, 1,3-dioxane, 1,4-dioxane, methyl acetate, ethyl acetate, methyl propionate, ethyl propionate, methyl butyrate, methyl isobutyrate, methyl trimethyl acetate, ethyl trimethyl acetate, acetonitrile, glutaronitrile, adiponitrile, methoxyacetonitrile, 3-methoxypropionitrile, N,N-dimethylformamide, N-methylpyrrolidone (NMP), N-methyloxazolidinone, N,N'-dimethylimidazolidinone, nitromethane, nitroethane, sulfolane, trimethyl phosphate, dimethylsulfoxide, and dimethylsulfoxide phosphoric acid. These may be used alone or in combination of two or more. Among these, at least one of ethylene carbonate, propylene carbonate, dimethyl carbonate, diethyl carbonate, ethyl methyl carbonate, or $\gamma$-butyrolactone is preferable; and a combination of a high-viscosity (high-dielectric constant) solvent (for example, relative permittivity $\varepsilon \geq 30$) such as ethylene carbonate and propylene carbonate and a low-viscosity solvent (for example, viscosity $\leq 1$ mPa·s) such as dimethyl carbonate, ethyl methyl carbonate, and diethyl carbonate is more preferable. By using a mixed solvent having such a combination, dissociation properties of electrolyte salts and mobility of ions are improved. As the above-described non-aqueous solvent, a combination of ethylene carbonate, dimethyl carbonate, and ethyl methyl carbonate is particularly preferable.

The non-aqueous solvent used in the present invention is not limited to these solvents.

In a case where the slurry according to the embodiment of the present invention is a slurry for forming a positive electrode of the first form, the dispersion medium is preferably N-methylpyrrolidone (NMP) or a mixed solvent of N-methylpyrrolidone (NMP) and dimethyl carbonate (DMC).

In a case where the slurry according to the embodiment of the present invention is a slurry for forming a negative electrode of the first form, the dispersion medium is preferably water or N-methylpyrrolidone (NMP).

In a case where the slurry according to the embodiment of the present invention is a slurry for forming an electrode of the second form, the dispersion medium is preferably a mixed solvent of ethylene carbonate (EC), dimethyl carbonate (DMC), and ethyl methyl carbonate (EMC).

<Electrolytic solution>

In a case where the slurry according to the embodiment of the present invention is a slurry for forming an electrode of the second form, an electrolyte is added to the dispersion medium to be used as an electrolytic solution.

As the dispersion medium, the above-described non-aqueous solvent is used.

As the electrolyte, an electrolyte used for the electrolytic solution of the semi-solid state secondary battery can be used. A metal salt is preferable, and examples thereof include a lithium salt, a potassium salt, a sodium salt, a calcium salt, and a magnesium salt.

As the lithium salt, a lithium salt which is usually used for an electrolyte of a lithium ion secondary battery is preferable, and examples thereof include the following lithium salts.

(L-1) Inorganic lithium salt: inorganic fluoride salt such as $LiPF_6$, $LiBF_4$, $LiAsF_6$, and $LiSbF_6$; perhalogenate such as $LiClO_4$, $LiBrO_4$, and $LiIO_4$; an inorganic chloride salt such as $LiAlCl_4$; and the like
(L-2) Fluorine-containing organic lithium salt: perfluoroalkane sulfonate such as $LiCF_3SO_3$; perfluoroalkanesulfo-nylimide salt such as $LiN(CF_3SO_2)_2$, $LiN(CF_3CF_2SO_2)_2$, $LiN(FSO_2)_2$, and $LiN(CF_3SO_2)(C_4F_9SO_2)$; perfluoroalkane sulfonylmethide salt such as $LiC(CF_3SO_2)_3$; fluoroalkyl fluorophosphate such as $Li[PF_5(CF_2CF_2CF_3)]$, $Li[PF_4(CF_2CF_2CF_3)_2]$, $Li[PF_3(CF_2CF_2CF_3)_3]$, $Li[PF5(CF_2CF_2CF_2CF_3)]$, $Li[PF_4(CF_2CF_2CF_2CF_3)_2]$, and $Li[PF_3(CF_2CF_2CF_2CF_3)_3]$; and the like
(L-3) Oxalatoborate salt: lithium bis(oxalato)borate, lithium difluorooxalatoborate, and the like

Among these, $LiPF_6$, $LiBF_4$, $LiAsF_6$, $LiSbF_6$, $LiClO_4$, $Li(R^{f1}SO_3)$, $LiN(R^{f1}SO_2)_2$, $LiN(FSO_2)_2$, or $LiN(R^{f1}SO_2)(R^{f2}SO_2)$ is preferable; $LiPF_6$, $LiBF_4$, $LiN(R^{f1}SO_2)_2$, $LiN(FSO_2)_2$, or $LiN(R^{f1}SO_2)(R^{f2}SO_2)$ is more preferable; and $LiPF_6$ is particularly preferable. Here, $R^{f1}$ and $R^{f2}$ each represent a perfluoroalkyl group, and the number of carbon atoms in the perfluoroalkyl group is preferably 1 to 6.

As the lithium salt used in the electrolytic solution according to the embodiment of the present invention, one kind of electrolyte may be used alone, or two or more kinds of electrolytes may be arbitrarily combined.

A concentration of the lithium salt in the electrolytic solution is usually 10.0% to 50.0% by mass, preferably 15.0% to 30.0% by mass. The molar concentration is preferably 0.5 to 1.5 M.

<Dispersant>

The slurry according to the embodiment of the present invention may contain a dispersant. The dispersant has a repulsion site together with an adsorption site which is adsorbed to the electrode active material and the conductive auxiliary agent, and has a function of suppressing aggregation between the active materials and between the conductive auxiliary agents.

As the dispersant, a dispersant which is typically used for the non-aqueous electrolytic solution secondary battery can be appropriately selected and used. For example, polyvinylpyrrolidone (PVP), polyethylene glycol (PEG), or the like can be used.

The following commercially available products can also be used as the dispersant.

BYK-ET3004, BYK-ET3034, BYK-ET3003, DISPERBYK-102, DISPERBYK-106, DISPERLAST-1142 (all trade names, manufactured by BYK-Chemie GmbH), Tween 20, Triton-X-100 (both trade names, manufactured by Tokyo Chemical Industry Co., Ltd.)

In the slurry according to the embodiment of the present invention, a content of the dispersant is preferably 0.1 to 5 parts by mass and more preferably 0.2 to 1 part by mass with respect to 100 parts by mass of the total of the electrode active material and the conductive auxiliary agent.

<Other components>

The slurry according to the embodiment of the present invention can contain, as desired, a binder, an ionic liquid, a thickener, an antifoaming agent, a leveling agent, a dehydrating agent, an antioxidant, or the like. These components can be used as those which are usually used in the non-aqueous electrolytic solution secondary battery.

As the binder, polyvinylidene fluoride (PVdF) or a styrene-butadiene copolymer (SBR) is preferable.

A content of the binder is preferably 0.1 to 8 parts by mass and more preferably 0.5 to 2 parts by mass with respect to 100 parts by mass of the electrode active material.

As the thickener, carboxymethyl cellulose (CMC) is preferable.

A content of the thickener is preferably 0.1 to 2.0 parts by mass and more preferably 0.5 to 1.5 parts by mass with respect to 100 parts by mass of the total of the electrode active material and the conductive auxiliary agent.

[Non-aqueous electrolytic solution secondary battery]

The non-aqueous electrolytic solution secondary battery according to the embodiment of the present invention (hereinafter, also referred to as "secondary battery according to the embodiment of the present invention") includes a positive electrode, a separator, and a negative electrode in this order, in which the slurry according to the embodiment of the present invention is used for forming a positive electrode active material layer and/or a negative electrode active material layer.

Before the description of the secondary battery according to the embodiment of the present invention, a structure of a general non-aqueous electrolytic solution secondary battery will be described.

Fig. 1 is a schematic cross-sectional view showing a laminated structure of a general non-aqueous electrolytic solution secondary battery 10, including a working electrode which acts in a case where the battery is operated. The non-aqueous electrolytic solution secondary battery 10 has a laminated structure (hereinafter, also referred to as an electrode laminate) in which a negative electrode collector 1, a negative electrode active material layer 2, a separator 3, a positive electrode active material layer 4, and a positive electrode collector 5 are laminated in this order from the negative electrode side. The negative electrode active material layer 2, the positive electrode active material layer 4, and a space therebetween are filled with a non-aqueous electrolytic solution (not shown), and are separated by the separator 3. The separator 3 has pores, and functions as a positive and negative electrode-separating membrane which insulates the positive electrode and the negative electrode from each other while allowing transmission of the electrolytic solution and ions into the pores in a state in which a typical battery is used. With such a structure, for example, in the case of lithium ion secondary battery, during charge, while electrons ($e^-$) are supplied to the negative electrode side through an external circuit, lithium ions ($Li^+$) move from the positive electrode through the electrolytic solution and are accumulated in the negative electrode. On the other hand, during discharge, while the lithium ions ($Li^+$) accumulated in the negative electrode are returned to the positive electrode side through the electrolytic solution, electrons are supplied to an operation portion 6.

In the example shown in the drawing, a light bulb is adopted as the operation portion 6, which is turned on by the discharge.

Subsequently, a basic configuration characteristic of the semi-solid state secondary battery will be described. In the semi-solid state secondary battery, as described above, the electrode active material layer is an electrode slurry layer in which an electrode active material is dispersed in a non-aqueous electrolytic solution. Therefore, the secondary battery according to the embodiment of the present invention is different from a general non-aqueous electrolytic solution secondary battery in terms of the fact that the electrode active material layer is a slurry (suspension or dispersion liquid) obtained by dispersing the electrode active material in a non-aqueous electrolytic solution.

That is, in a general non-aqueous electrolytic solution secondary battery, a coating liquid is prepared in which the electrode active material is dispersed in a medium containing no electrolyte, the coating liquid is applied onto a collector to form a coating film, and then the coating film is dried to form a thin film-shaped electrode active material layer. The coating liquid is usually blended with a binding material (binder), and a hard electrode active material layer in which electrode active material particles are firmly bound to each other is formed. Since the non-aqueous electrolytic solution is present on the electrode active material layer formed in this way (between the negative electrode active material layer and the positive electrode active material layer), the electrode active material layer is in a state of a hard solid particle layer as a whole even in a case where there is a portion in which the non-aqueous electrolytic solution can permeate, and is not a slurry layer.

On the other hand, in the semi-solid state secondary battery, the electrode active material layer is an electrode slurry layer obtained by dispersing the solid particles containing the electrode active material and the conductive auxiliary agent in the non-aqueous electrolytic solution which is obtained by dissolving the lithium salt (electrolyte) in the non-aqueous solvent. In a case where the electrode slurry layer functions as the electrode active material layer, a strong bonding property is not required between the electrode active material particles, and thus the electrode slurry layer generally does not contain a binding material. The basic layer configuration of the semi-solid state secondary battery is the same as the layer configuration shown in Fig. 1, except that the electrode active material layer is an electrode slurry layer and the electrode slurry layer and the separator are in contact with each other.

In a case where the secondary battery according to the embodiment of the present invention is a general non-aqueous electrolytic solution secondary battery, the positive electrode active material layer and/or the negative electrode active material layer is a layer obtained by applying the slurry according to the first form of the present invention and drying the slurry as necessary.

In a case where the secondary battery according to the embodiment of the present invention is a semi-solid state secondary battery, the positive electrode active material layer and/or the negative electrode active material layer is a layer formed of the slurry according to the second form of the present invention.

In the secondary battery according to the embodiment of the present invention, it is preferable that both the positive electrode active material layer and the negative electrode active material layer are formed of the slurry according to the embodiment of the present invention.

As an electrode active material layer in a case where any one of the positive electrode active material layer or the negative electrode active material layer is formed of a slurry for forming an electrode, other than the slurry according to the embodiment of the present invention, a typical electrode active material layer can be used.

In the secondary battery according to the embodiment of the present invention, each of materials and members such as the positive electrode active material, the positive electrode collector, the negative electrode active material, the negative electrode collector, and the separator is not particularly limited, except that the slurry according to the embodiment of the present invention is used for forming the positive electrode active material layer and/or the negative electrode active material layer. As these materials, members, and the like, those used for a typical secondary battery can be appropriately adopted. For the members and the manufacturing methods which are usually used for these secondary batteries, for example, JP2016-201308A, JP2005-108835A, JP2012-185938A, WO2018/135395A, and the like can be appropriately referred to.

A thickness of the positive electrode active material layer in the secondary battery according to the embodiment of the present invention is not particularly limited, and can be set to, for example, 5 to 500 $\mu$m, preferably 20 to 200 $\mu$m.

A thickness of the negative electrode active material layer in the secondary battery according to the embodiment of the present invention is not particularly limited, and can be set to, for example, 5 to 500 $\mu$m, preferably 20 to 200 $\mu$m.

[Manufacturing method of non-aqueous electrolytic solution secondary battery]

The manufacturing method of a non-aqueous electrolytic solution secondary battery according to the embodiment of the present invention includes applying the slurry according to the embodiment of the present invention onto an electrode collector to form an electrode active material layer.

A method of applying the slurry is not particularly limited, and for example, the slurry can be applied by using a roll coater, drop coating, pressing (roll pressing or flat plate pressing) the slurry after evenly installing the slurry on the collector, or installing the slurry in a frame having a specified thickness and pressing the slurry.

In a case where the secondary battery obtained by the manufacturing method of a secondary battery according to the embodiment of the present invention is a typical secondary battery, the manufacturing method according to the embodiment of the present invention may include drying the slurry according to the embodiment of the present invention.

In the manufacturing method of a non-aqueous electrolytic solution secondary battery according to the embodiment of the present invention, a typical method can be appropriately adopted except that the electrode active material layer is formed as a specific slurry layer. For example, JP2016-201308A, JP2005-108835A, JP2012-185938A, JP2017-147222A, and the like can be appropriately referred to.

The non-aqueous electrolytic solution secondary battery according to the embodiment of the present invention can be mounted on electronic apparatuses such as a notebook computer, a pen-based input personal computer, a mobile personal computer, an e-book player, a mobile phone, a cordless phone handset, a pager, a handy terminal, a portable fax, a mobile copier, a portable printer, a headphone stereo, a video movie, a liquid crystal television, a handy cleaner, a portable CD, a mini disc, an electric shaver, a transceiver, an electronic notebook, a calculator, a memory card, a portable tape recorder, a radio, a backup power supply, and a memory card. In addition, in a case of being used for consumer applications, the non-aqueous electrolytic solution secondary battery according to the embodiment of the present invention can be mounted on an automobile, an electric vehicle, a motor, a lighting instrument, a toy, a game device, a road conditioner, a watch, a strobe, a camera, a medical device (a pacemaker, a hearing aid, a shoulder massage device, and the like), or the like. Furthermore, the non-aqueous electrolytic solution secondary can be used for various military usages and universe usages. In addition, the secondary battery according to the embodiment of the present invention can also be combined with a solar battery.

Hereinafter, the present invention will be described in more detail with reference to Examples. The present invention is not interpreted as being limited thereto.

Examples

[Preparation of slurry for forming electrode]

A slurry for forming an electrode was prepared using the following components.

<Electrode active material>

· LFP1: LiFePO$_4$, manufactured by Gelon Lib Group Co., Ltd. (average particle diameter (sphere-equivalent average particle diameter): 0.9 μm)
· LFP2: LiFePO$_4$, manufactured by Gelon Lib Group Co., Ltd. (average particle diameter (sphere-equivalent average particle diameter): 1.2 μm)
· LFP3: LiFePO$_4$, manufactured by Gelon Lib Group Co., Ltd. (average particle diameter (sphere-equivalent average particle diameter): 1.7 μm)
· LFP4: LiFePO$_4$, manufactured by Gelon Lib Group Co., Ltd. (average particle diameter (sphere-equivalent average particle diameter): 2.5 μm)
· Graphite 1: artificial graphite, UF-G5 (trade name), manufactured by Showa Denko K.K. (average particle diameter (sphere-equivalent average particle diameter): 3 μm)
· Graphite 2: artificial graphite, UF-G10 (trade name), manufactured by Showa Denko K.K. (average particle diameter (sphere-equivalent average particle diameter): 5 μm)
· Graphite 3: artificial graphite, UF-G30 (trade name), manufactured by Showa Denko K.K. (average particle diameter (sphere-equivalent average particle diameter): 10 μm)

<Conductive auxiliary agent>

· AB1: acetylene black, Li100 (trade name), manufactured by Denka Company Limited
· AB2: acetylene black, Li435 (trade name), manufactured by Denka Company Limited
· CB1: carbon black, LITX300 (trade name), manufactured by Cabot Corporation
· CB2: carbon black, PBX09 (trade name), manufactured by Cabot Corporation
· KB1: ketjen black, carbon ECP (trade name), manufactured by LION SPECIALTY CHEMICALS CO., LTD.
· KB1H: ketjen black having a controlled bulk density as follows;

Using a planetary ball mill (Fritsch Japan Co., Ltd., P-7 (trade name)), 30 g of zirconia beads (diameter: 3 mm) were added to 45 mL of a zirconia vessel, 10 g of a powder of KB1 (bulk density: 38 g/L) was added thereto, and the mixture was mixed at 300 rpm for 24 hours to dissolve the aggregation. In this way, a conductive auxiliary agent powder (KB1H) having a bulk density of 32 g/L was obtained.

· KB1HS: ketjen black (KB1H) having a controlled bulk density as described above was further subjected to a surface treatment as follows;
5 parts by mass of water and 3 parts by mass of acetic acid were added to 95 parts by mass of ethanol, and 10 parts by mass of KB1H was further added thereto and stirred for 10 minutes. Thereafter, 2 parts by mass of methyltrimethoxysilane (MTMS) was added thereto, and the mixture was stirred for 5 minutes. Thereafter, the mixture was allowed to stand and the liquid was removed by decantation. After washing twice with ethanol, the resultant was vacuum-heated at 110°C for 24 hours.

· KB2: ketjen black, ECP600JD (trade name), manufactured by LION SPECIALTY CHEMICALS CO., LTD.

<Dispersion medium>

· NMP: N-methylpyrrolidone
· DMC: dimethyl carbonate
· EMC: ethyl methyl carbonate

1) Preparation of non-aqueous electrolytic solution

A mixed solvent in which ethylene carbonate (EC), dimethyl carbonate (DMC), and ethyl methyl carbonate (EMC) were mixed at a mass ratio of EC:DMC:EMC = 3:4:3 was blended with $LiPF_6$ as a lithium salt to a concentration of 1 M to prepare a non-aqueous electrolytic solution (electrolytic solution 1).

2) Preparation of positive electrode slurry (first form)

· Comparative Examples 1 to 5 and Examples 1 to 11

An electrode active material, a conductive auxiliary agent, and a dispersion medium shown in Table 1 were mixed with polyvinylidene fluoride (PVdF) as a binder to obtain a positive electrode slurry (slurry for forming an electrode). A content of each component in the positive electrode slurry was as follows.
The amounts of the electrode active material and the conductive auxiliary agent were set such that the contents of the electrode active material and the conductive auxiliary agent in the total of the electrode active material and the conductive auxiliary agent were respectively the proportion (% by mass) shown in Table 1.
The amount of the dispersion medium in the slurry was set such that the amount thereof per 100 g of the total of the electrode active material and the conductive auxiliary agent in the slurry was the amount shown in Table 1.
A content of the binder was set to 6 parts by mass with respect to 100 parts by mass of the electrode active material.
In this way, positive electrode slurries of Comparative Examples 1 to 5 and Examples 1 to 11 were obtained. The content of the electrode active material in the positive electrode slurry of Example 1 was 70.8% by mass.
In Comparative Example 4 and Examples 9 to 11, a dispersion medium in which the surface free energy was controlled by mixing a plurality of types of dispersion media was used. Specifically, a dispersion medium in which N-methylpyrrolidone (NMP) and dimethyl carbonate (DMC) were mixed at NMP:DMC = 3:2 (mass ratio) was used. In Table 1, it is indicated as "NMP + DMC". The dispersion medium was also used in Comparative Example 8 described later.
In Comparative Example 5, a dispersion medium in which N-methylpyrrolidone (NMP) and water were mixed at NMP:Water = 2:3 (mass ratio) was used. In Table 1, it is indicated as "NMP + Water". The dispersion medium was also used in Comparative Examples 6 and 10 described later.

· Example 12

A positive electrode slurry of Example 12 was obtained in the same manner as in Example 10, except that, as a dispersant, ET3004 (trade name) (alkylammonium salt of acidic group-containing copolymer) manufactured by BYK-Chemie GmbH was added in an amount of 1 part by mass with respect to 100 parts by mass of the total of the electrode active material and the conductive auxiliary agent, and a dispersion medium in which N-methylpyrrolidone (NMP) and dimethyl carbonate (DMC) were mixed at NMP:DMC = 2:3 (mass ratio) was used. The above-described dispersion medium is indicated as "NMP + DMC2" in Table 1.

3) Preparation of positive electrode slurry (second form)

· Example 20

The electrode active material, the conductive auxiliary agent, and the non-aqueous electrolytic solution shown in Table 1 were mixed at 1,250 rpm for 90 seconds using a centrifugal planetary mixer (manufactured by Thinky Corporation; Awatori Nentaro (trade name)) to obtain a positive electrode slurry. A content of each component in the positive electrode slurry was as follows.

The amounts of the electrode active material and the conductive auxiliary agent were set such that the contents of the electrode active material and the conductive auxiliary agent in the total of the electrode active material and the conductive auxiliary agent were respectively the proportion (% by mass) shown in Table 1.

The amount of the non-aqueous electrolytic solution in the slurry was set such that the amount thereof per 100 g of the total of the electrode active material and the conductive auxiliary agent in the slurry was the amount shown in Table 1.

In this way, a positive electrode slurry of Example 20 was obtained. It is noted that the use of the above-described electrolytic solution 1 as the non-aqueous electrolytic solution is shown in the column of "Type of dispersion medium" in the table for convenience, but the dispersion medium in the electrolytic solution 1 is a mixed solvent of ethylene carbonate (EC), dimethyl carbonate (DMC), and ethyl methyl carbonate (EMC).

4) Preparation of negative electrode slurry (first form)

· Comparative Examples 6 to 10 and Example 13

The electrode active material, the conductive auxiliary agent, and the dispersion medium shown in Table 1, a styrene-butadiene copolymer (SBR) as a binder, and carboxymethyl cellulose (CMC) as a thickener were mixed to obtain a negative electrode slurry (slurry for forming an electrode). A content of each component in the negative electrode slurry was as follows.

The amounts of the electrode active material and the conductive auxiliary agent were set such that the contents of the electrode active material and the conductive auxiliary agent in the total of the electrode active material and the conductive auxiliary agent were respectively the proportion (% by mass) shown in Table 1.

The amount of the dispersion medium in the slurry was set such that the amount thereof per 100 g of the total of the electrode active material and the conductive auxiliary agent in the slurry was the amount shown in Table 1.

A content of the binder was set to 1 part by mass with respect to 100 parts by mass of the electrode active material, and a content of the thickener was set to 1 part by mass with respect to 100 parts by mass of the electrode active material.

In this way, negative electrode slurries of Comparative Examples 6 to 10 and Example 13 were obtained.

5) Preparation of negative electrode slurry (second form)

· Example 21

The electrode active material, the conductive auxiliary agent, and the non-aqueous electrolytic solution shown in Table 1 were mixed at 1,250 rpm for 90 seconds using a centrifugal planetary mixer (manufactured by Thinky Corporation; Awatori Nentaro (trade name)) to obtain a negative electrode slurry. A content of each component in the negative electrode slurry was as follows.

The amounts of the electrode active material and the conductive auxiliary agent were set such that the contents of the electrode active material and the conductive auxiliary agent in the total of the electrode active material and the conductive auxiliary agent were respectively the proportion (% by mass) shown in Table 1.

The amount of the non-aqueous electrolytic solution in the slurry was set such that the amount thereof per 100 g of the total of the electrode active material and the conductive auxiliary agent in the slurry was the amount shown in Table 1.

In this way, a negative electrode slurry of Example 21 was obtained.

In order to confirm the satisfaction of the expression (1) to expression (4) of each electrode slurry obtained as described above, the liquid absorption amount of the dispersion medium per 100 g of the electrode active material, the liquid absorption amount of the dispersion medium per 100 g of the conductive auxiliary agent, the BET specific surface area of the conductive auxiliary agent, the surface free energy of the dispersion medium, and the surface free energy of the conductive auxiliary agent were obtained as described above for the components used in the preparation of each slurry. Furthermore, the bulk density of the conductive auxiliary agent was confirmed as described above.

Table 1 collectively shows the types of the electrode active material, the conductive auxiliary agent, and the dispersion medium constituting the electrode slurry; the liquid absorption amount of the dispersion medium per 100 g of the electrode active material and the conductive auxiliary agent (in Table 1, "Liquid absorption amount of active material" and "Liquid absorption amount of conductive auxiliary agent"); the proportion of the electrode active material and the conductive auxiliary agent in the total of the electrode active material and the conductive auxiliary agent (in Table 1, "Proportion of active material" and "Proportion of conductive auxiliary agent"); the amount of the dispersion medium per 100 g of the total of the electrode active material and the conductive auxiliary agent (in Table 1, "Amount of dispersion medium"); and the concentration of solid contents and the concentration of active materials in the electrode slurry.

Table 2 shows the satisfaction of the expressions (1) to (4). In the column of "Difference in surface E" in Table 2, the absolute value of the difference between the surface free energy of the dispersion medium and the surface free energy of the conductive auxiliary agent described above is indicate; in the column of "Surface E of conductive auxiliary agent", the surface free energy of the conductive auxiliary agent is indicated; and in "Surface E of dispersion medium", the surface free energy of the dispersion medium is indicated. The column of "Dispersant" in Table 2 also indicates the presence or absence of the dispersant. "None" means that no dispersant was used. In a case where the dispersant was used, the type of the used dispersant is indicated. For convenience, in a case where the conductive auxiliary agent was subjected to a surface treatment without adding the dispersant, the type of a surface treatment agent used is indicated in the column of "Dispersant".

[Table 1]

| | Active material | Liquid absorption amount of active material | Proportion of active material | Conductive auxiliary agent | Liquid absorption amount of conductive auxiliary agent | Proportion of conductive auxiliary agent | Dispersion medium | Amount of dispersion medium | Concentration of solid contents in slurry | Concentration of active material in slurry |
|---|---|---|---|---|---|---|---|---|---|---|
| | Type | $S_a$ | $d_a$ | Type | $S_c$ | $d_c$ | Type | $y$ | wt% | wt% |
| | | ml/100 g | wt% | | ml/100 g | wt% | | ml/100 g | | |
| Comparative Example 1 | LFP1 | 34 | 95.70 | AB1 | 140 | 4.30 | NMP | 50.6 | 65.8 | 62.3 |
| Comparative Example 2 | LFP2 | 22 | 95.70 | AB2 | 205 | 4.30 | NMP | 40.5 | 70.6 | 67.5 |
| Comparative Example 3 | LFP1 | 34 | 95.70 | AB2 | 205 | 4.30 | NMP | 43.6 | 69.1 | 66.1 |
| Comparative Example 4 | LFP2 | 21 | 95.70 | AB1 | 134 | 4.30 | NMP + DMC | 32.0 | 75.3 | 72.0 |
| Comparative Example 5 | LFP2 | 22 | 95.70 | AB2 | 208 | 4.30 | NMP + Water | 32.0 | 75.3 | 72.0 |
| Example 1 | LFP3 | 19.5 | 98.20 | CBI | 495 | 1.80 | NMP | 37.7 | 72.1 | 70.8 |
| Example 2 | LFP3 | 19.5 | 98.20 | CBI | 495 | 1.80 | NMP | 32.7 | 74.9 | 73.5 |
| Example 3 | LFP3 | 19.5 | 98.20 | CBI | 495 | 1.80 | NMP | 29.4 | 76.8 | 75.4 |
| Example 4 | LFP3 | 19.5 | 99.90 | CBI | 495 | 0.10 | NMP | 29.4 | 76.8 | 76.7 |
| Example 5 | LFP4 | 13 | 99.90 | CB1 | 495 | 0.10 | NMP | 22.9 | 81.0 | 80.9 |
| Example 6 | LFP4 | 13 | 99.90 | KB1 | 1290 | 0.10 | NMP | 22.9 | 81.0 | 80.9 |
| Example 7 | LFP4 | 13 | 99.90 | KB2 | 1690 | 0.10 | NMP | 22.9 | 81.0 | 80.9 |
| Example 8 | LFP3 | 19.5 | 98.20 | CB2 | 520 | 1.80 | NMP | 37.7 | 72.1 | 70.8 |
| Example 9 | LFP4 | 12.8 | 99.90 | KB1 | 1250 | 0.10 | NMP + DMC | 22.9 | 81.0 | 80.9 |
| Example 10 | LFP4 | 12.8 | 99.90 | KB1H | 1480 | 0.10 | NMP + DMC | 22.9 | 81.0 | 80.9 |

(continued)

| | Active material | Liquid absorption amount of active material | Proportion of active material | Conductive auxiliary agent | Liquid absorption amount of conductive auxiliary agent | Proportion of conductive auxiliary agent | Dispersion medium | Amount of dispersion medium | Concentration of solid contents in slurry | Concentration of active material in slurry |
|---|---|---|---|---|---|---|---|---|---|---|
| | Type | Sa | da | Type | Sc | dc | Type | y | wt% | wt% |
| | | ml/100 g | wt% | | ml/100 g | wt% | | ml/100 g | | |
| Example 11 | LFP4 | 12.8 | 99.90 | KB1HS | 980 | 0.10 | NMP + DMC | 22.9 | 81.0 | 80.9 |
| Example 12 | LFP4 | 12.6 | 99.90 | KB1H | 1440 | 0.10 | NMP + DMC2 | 22.9 | 81.0 | 80.9 |
| Comparative Example 6 | Graphite1 | 34 | 95.70 | AB1 | 145 | 4.30 | NMP + Water | 50.6 | 66.4 | 63.5 |
| Comparative Example 7 | Graphite2 | 22 | 95.70 | AB2 | 205 | 4.30 | NMP | 40.5 | 70.6 | 67.5 |
| Comparative Example 8 | Graphite1 | 36 | 95.70 | AB2 | 201 | 4.30 | NMP + DMC | 43.6 | 69.6 | 66.7 |
| Comparative Example 9 | Graphite2 | 22 | 95.70 | AB1 | 140 | 4.30 | NMP | 32.0 | 75.8 | 72.5 |
| Comparative Example 10 | Graphite2 | 22 | 95.70 | AB2 | 208 | 4.30 | NMP + Water | 32.0 | 75.8 | 72.5 |
| Example 13 | Graphite3 | 19.5 | 98.20 | CBI | 495 | 1.80 | NMP | 37.7 | 72.6 | 71.3 |
| Example 20 | LFP4 | 12.5 | 99.90 | KB1H | 1420 | 0.10 | Electrolytic solution 1 | 22.9 | 81.0 | 80.9 |
| Example 21 | Graphite3 | 19.3 | 98.20 | CBI | 450 | 1.80 | Electrolytic solution 1 | 35.0 | 74.1 | 72.7 |

[Table 2]

| | | | Expression (1) | Expression (2) | Expression (3) | Expression (4) | Surface E of conductive auxiliary agent | Surface E of dispersion medium | Bulk density of conductive auxiliary agent | Dispersant |
|---|---|---|---|---|---|---|---|---|---|---|
| | | | Effective liquid amount | Liquid absorption amount | Specific surface area of conductive auxiliary agent | Difference in surface E | | | | |
| | | | y - x | x | $S_{BET}$ | ΔE | Ec | Ed | | |
| | | | mL/100 g | mL/100 g | m$^2$/g | mN/m | mN/m | mN/m | g/L | |
| Positive electrode | C-1 | Comparative Example 1 | 12.0 | 38.6 | 90 | 31 | 12 | 43 | 41 | None |
| Positive electrode | C-2 | Comparative Example 2 | 10.6 | 29.9 | 180 | 29 | 14 | 43 | 43 | None |
| Positive electrode | C-3 | Comparative Example 3 | 2.2 | 41.4 | 180 | 29 | 14 | 43 | 43 | None |
| Positive electrode | C4 | Comparative Example 4 | 6.1 | 25.9 | 90 | 21 | 12 | 33 | 41 | None |
| Positive electrode | C-5 | Comparative Example 5 | 2.0 | 30.0 | 180 | 54 | 14 | 68 | 43 | None |
| Positive electrode | C-6 | Example 1 | 9.6 | 28.1 | 180 | 28 | 15 | 43 | 38 | None |
| Positive electrode | C-7 | Example 2 | 4.6 | 28.1 | 180 | 28 | 15 | 43 | 38 | None |
| Positive electrode | C-8 | Example 3 | 1.3 | 28.1 | 180 | 28 | 15 | 43 | 38 | None |
| Positive electrode | C-9 | Example 4 | 9.4 | 20.0 | 180 | 28 | 15 | 43 | 38 | None |
| Positive electrode | C-10 | Example 5 | 9.4 | 13.5 | 180 | 28 | 15 | 43 | 38 | None |
| Positive electrode | C-11 | Example 6 | 8.6 | 14.3 | 890 | 26 | 17 | 43 | 37 | None |
| Positive electrode | C-12 | Example 7 | 8.2 | 14.7 | 1480 | 23 | 20 | 43 | 36 | None |

EP 4 645 445 A1

(continued)

| | | | Expression (1) Effective liquid amount $y - x$ mL/100 g | Expression (2) Liquid absorption amount $x$ mL/100 g | Expression (3) Specific surface area of conductive auxiliary agent $S_{BET}$ m²/g | Expression (4) Difference in surface E $\Delta E$ mN/m | Surface E of conductive auxiliary agent $E_c$ mN/m | Surface E of dispersion medium $E_d$ mN/m | Bulk density of conductive auxiliary agent g/L | Dispersant |
|---|---|---|---|---|---|---|---|---|---|---|
| Positive electrode | C-13 | Example 8 | 9.2 | 28.5 | 230 | 18 | 25 | 43 | 38 | None |
| Positive electrode | C-14 | Example 9 | 8.9 | 14.0 | 890 | 16 | 17 | 33 | 37 | None |
| Positive electrode | C-15 | Example 10 | 8.6 | 14.3 | 910 | 16 | 17 | 33 | 32 | None |
| Positive electrode | C-16 | Example 11 | 9.1 | 13.8 | 900 | 14 | 19 | 33 | 32 | MTMS |
| Positive electrode | C-17 | Example 12 | 8.9 | 14.0 | 910 | 10 | 17 | 27 | 32 | ET3004 |
| Negative electrode | A-1 | Comparative Example 6 | 11.8 | 38.8 | 90 | 56 | 12 | 68 | 41 | None |
| Negative electrode | A-2 | Comparative Example 7 | 10.6 | 29.9 | 180 | 29 | 14 | 43 | 43 | None |
| Negative electrode | A-3 | Comparative Example 8 | 0.5 | 43.1 | 180 | 19 | 14 | 33 | 43 | None |
| Negative electrode | A-4 | Comparative Example 9 | 4.9 | 27.1 | 90 | 31 | 12 | 43 | 41 | None |
| Negative electrode | A-5 | Comparative Example 10 | 2.0 | 30.0 | 180 | 54 | 14 | 68 | 43 | None |
| Negative electrode | A-6 | Example 13 | 9.6 | 28.1 | 180 | 28 | 15 | 43 | 38 | None |
| Positive electrode | C-20 | Example 20 | 9.0 | 13.9 | 910 | 15 | 17 | 32 | 32 | None |

| | | | Expression (1) | Expression (2) | Expression (3) | Expression (4) | Surface E of conductive auxiliary agent | Surface E of dispersion medium | Bulk density of conductive auxiliary agent | Dispersant |
|---|---|---|---|---|---|---|---|---|---|---|
| | | | Effective liquid amount | Liquid absorption amount | Specific surface area of conductive auxiliary agent | Difference in surface E | | | | |
| | | | $y - x$ | $x$ | $S_{BET}$ | $\Delta E$ | Ec | Ed | | |
| | | | mL/100 g | mL/100 g | $m^2$/g | mN/m | mN/m | mN/m | g/L | |
| Negative electrode | A-20 | Example 21 | 7.9 | 27.1 | 180 | 17 | 15 | 32 | 38 | None |

The viscosity and manufacturing suitability of the obtained electrode slurry were evaluated. The manufacturing suitability was evaluated from the viewpoints of the dispersion stability after the production of the electrode slurry, the drying time required for the formation of the electrode active material layer, and the coating suitability. Specific evaluation methods are described below.

[Slurry viscosity measuring method]

An E-type viscometer (TV-35, manufactured by TOKI SANGYO CO., LTD.) and a standard cone rotor (1°34' × R24) were used. A sample cup was adjusted to 25°C, 1.1 mL of the electrode slurry obtained above was put into the sample cup, the sample cup was set in the main body, and the temperature was maintained for 5 minutes until the temperature became constant. Thereafter, a viscosity measured at a rotation speed of 50 rpm was defined as the viscosity value. The obtained viscosity value was evaluated by applying the obtained viscosity value to the following evaluation standard.

-Evaluation standard-

A: less than 100 mPa. s
B: 100 mPa·s or more and less than 1,000 mPa·s
C: 1,000 mPa·s or more and less than 5,000 mPa·s
D: 5,000 mPa·s or more and less than 10,000 mPa·s
E: 10,000 mPa·s or more and less than 100,000 mPa·s
F: 100,000 mPa·s or more

[Dispersion stability]

The dispersion stability was evaluated using a sedimentation state of the particles after the production of the slurry as an indicator.
90 mL of each electrode slurry obtained above was put into a vial bottle (100 ml, diameter: 30 mm) and allowed to stand for 72 hours, thereby forming a supernatant region above the sediment in a vertical direction.
After 72 hours, a height ($H_S$) of the above-described supernatant region was measured using a ruler. In addition, a height ($H_T$) of the entire slurry (a height of the sediment and the supernatant combined) was measured. A proportion ($H_S/H_T \times 100$) of the height ($H_S$) of the obtained supernatant region to the height ($H_T$) of the entire slurry was used as an indicator of the dispersion stability. The obtained value was evaluated by applying the obtained value to the following evaluation standard.

-Evaluation standard-

A: less than 2%
B: 2% or more and less than 4%
C: 4% or more and less than 10%
D: 10% or more and less than 15%
E: 15% or more and less than 30%
F: 30% or more

[Drying time required for formation of electrode active material layer]

Each electrode slurry obtained above was applied onto an aluminum foil (length: 300 mm, width: 200 mm) such that a thickness after drying was approximately 80 μm. The obtained coated material was dried in a constant-temperature tank at 240°C to obtain an electrode layer. From the start of drying, a weight of the coated material was measured every 0.5 minutes, and a time until the weight of the coated material was no longer changed from the weight at the previous measurement was defined as the drying time.
In addition, since the positive electrode slurry of Example 20 and the negative electrode slurry of Example 21 were electrode slurries for a semi-solid state secondary battery and did not need to be dried, they were excluded from the evaluation.
The obtained drying time was evaluated by applying the obtained drying time to the following evaluation standard.

-Evaluation standard-

A: less than 1 minute
B: 1 minute or more and less than 10 minutes
C: 10 minute or more and less than 20 minutes
D: 20 minutes or more and less than 30 minutes
E: 30 minutes or more and less than 60 minutes
F: 60 minutes or more

[Smoothness of electrode surface]

The coating suitability was evaluated using smoothness of the electrode surface as an indicator.
Five central portions of the electrode layer (after drying) with the aluminum foil, obtained in the above-described drying time measurement, were punched out with a diameter of 10 mm, a film thickness ($\mu$m) of a center of each of the obtained punched pieces was measured, and an average value thereof was calculated ($T_C$). In addition, five regions of 1 cm from an end part of the coated material were punched out with a diameter of 10 mm, a film thickness ($\mu$m) of a center of each of the obtained punched pieces was measured, and an average value thereof was calculated ($T_S$). A deviation of the average film thickness of the side surface portion with respect to the central portion (($|T_C - T_S|$)/$T_C \times 100$) was calculated, and the obtained value was evaluated by applying the obtained value to the following evaluation standard.
For the positive electrode slurry of Example 20 and the negative electrode slurry of Example 21, the slurries were applied to a collector (the same aluminum foil as the aluminum foil used for producing the electrode layer for [Drying time required for formation of electrode active material layer] described above) to produce an electrode layer (thickness: 80 $\mu$m) with an aluminum foil. $T_C$ and $T_S$ were measured and the deviation of the average film thickness was evaluated in the same manner as described above, except that the electrode layer produced in this manner was used.

-Evaluation standard-

A: less than 2%
B: 2% or more and less than 4%
C: 4% or more and less than 6%
D: 6% or more and less than 8%
E: 8% or more and less than 10%
F: 10% or more

[Table 3]

| | Slurry viscosity | Manufacturing suitability (dispersion stability) | Manufacturing suitability (drying time) | Manufacturing suitability (smoothness) |
|---|---|---|---|---|
| Comparative Example 1 | E | F | F | F |
| Comparative Example 2 | E | F | F | F |
| Comparative Example 3 | F | E | E | F |
| Comparative Example 4 | F | F | F | F |
| Comparative Example 5 | F | F | F | F |
| Example 1 | C | D | D | D |
| Example 2 | D | D | D | D |
| Example 3 | E | C | E | E |

(continued)

|  | Slurry viscosity | Manufacturing suitability (dispersion stability) | Manufacturing suitability (drying time) | Manufacturing suitability (smoothness) |
|---|---|---|---|---|
| Example 4 | C | D | C | C |
| Example 5 | C | D | C | C |
| Example 6 | C | D | C | C |
| Example 7 | C | D | C | C |
| Example 8 | C | C | C | C |
| Example 9 | B | C | B | B |
| Example 10 | A | B | B | B |
| Example 11 | A | A | A | A |
| Example 12 | A | A | A | A |
| Comparative Example 6 | F | F | F | F |
| Comparative Example 7 | E | F | F | F |
| Comparative Example 8 | F | E | F | F |
| Comparative Example 9 | E | F | F | F |
| Comparative Example 10 | E | F | F | F |
| Example 13 | C | C | C | C |
| Example 20 | A | B | - | B |
| Example 21 | B | C | - | B |

In the first form of the slurry according to the embodiment of the present invention, all of the positive electrode of Comparative Example 1, in which the electrode active material, the conductive auxiliary agent, and the dispersant in the slurry did not satisfy all of the expressions (1) to (4), and the positive electrode slurries of Comparative Examples 2 to 5, in which the electrode active material, the conductive auxiliary agent, and the dispersant in the slurry do not satisfy any of the expressions (1) to (4), had low dispersion stability, and the electrode layers obtained by using the slurries were deteriorated in at least any of the drying time or the smoothness, and thus the manufacturing suitability was not sufficient. In addition, the positive electrode slurries of Comparative Examples 3 to 5 all had a high viscosity, and thus the coating properties were deteriorated from this point as well.

On the other hand, in all of the positive electrode slurries of Examples 1 to 12, satisfying all of the expressions (1) to (4), the dispersion state could be satisfactorily maintained even after standing for 72 hours although the slurry viscosity was low, and the electrode layers obtained by using these positive electrode slurries could be dried in less than 60 minutes after the application, and the variation in film thicknesses at the center and the end part was also suppressed.

The same tendency could be read from the comparison with the negative electrode slurries of Comparative Examples 6 to 10 and Example 13.

Furthermore, the same applies to the case of the positive electrode slurry and the negative electrode slurry of the second form in Examples 20 and 21.

In the electrode slurry according to the embodiment of the present invention, an electrode layer having high uniformity could be efficiently manufactured even in a case where a conductive auxiliary agent having a relatively large specific surface area of a BET specific surface area of 170 $m^2$/g or more was applied, and thus the manufacturing suitability was excellent.

Two types of secondary batteries (a general non-aqueous electrolyte secondary battery (simply referred to as a non-aqueous electrolytic solution secondary battery) and a semi-solid state secondary battery) were produced using each of the obtained electrode slurries, and the energy density and output characteristics of the obtained batteries were evaluated. A method of producing the secondary battery and a specific evaluation method are described below.

[Production of non-aqueous electrolytic solution secondary battery]

1) Preparation of positive electrode

Each of the positive electrode slurries of Comparative Examples 1 to 5 and Examples 1 to 12 described above was applied onto one surface of a positive electrode collector (aluminum foil) having a thickness of 12 $\mu$m at a thickness of 120 $\mu$m, and dried at 240°C until the dispersion medium was completely volatilized. Thereafter, a pressing step was performed at a pressure of 2.7 t using a roll press machine to obtain a sheet-shaped positive electrode (C-1 to C-17) consisting of a positive electrode collector and a positive electrode active material layer. A thickness of the positive electrode active material layer in the positive electrode was approximately 80 $\mu$m.

2) Preparation of negative electrode

Each of the negative electrode slurries of Comparative Example 6 and Example 13 described above was applied onto one surface of a negative electrode collector (copper foil) having a thickness of 12 $\mu$m at a thickness of 120 $\mu$m, and dried at 240°C until the dispersion medium was completely volatilized. Thereafter, a pressing step was performed at a pressure of 2 t using a roll press machine to obtain a sheet-shaped negative electrode (A-1 and A-6) consisting of a negative electrode collector and a negative electrode active material layer. A thickness of the negative electrode active material layer in the negative electrode was approximately 80 $\mu$m.

3) Preparation of battery

The obtained positive electrode and negative electrode were laminated with a separator (thickness: 20 $\mu$m) manufactured by W-SCOPE CO., LTD. to form a laminate consisting of positive electrode collector-positive electrode active material layer-separator-negative electrode active material layer-negative electrode collector, thereby obtaining an electrode laminate. The combination of the positive electrode and the negative electrode in a case of obtaining the electrode laminate was a combination shown in Table 4. By ultrasonic welding, an aluminum tab was attached to an end part of the positive electrode collector, and a nickel tab was attached to an end part of the negative electrode collector. A battery assembly was produced by accommodating the laminate in a laminating container. After injecting the non-aqueous electrolytic solution 1 in a state in which a liquid injection port was open, the liquid injection port was sealed to seal the case, thereby constructing a lithium ion secondary battery (a typical non-aqueous electrolytic solution secondary battery) for an evaluation test (S-1 to S-18).

[Production of semi-solid state secondary battery]

A semi-solid state secondary battery was produced with reference to JP2016-500465A (Examples 10 and 11). The details are described below.
The positive electrode slurry of Example 20 was applied onto an aluminum foil as a positive electrode collector such that a thickness was 500 $\mu$m and an area was 80 cm$^2$, thereby forming a positive electrode (C-20) consisting of a positive electrode collector and a positive electrode active material layer.
Similarly, the negative electrode slurry of Example 21 was applied onto a copper foil as a negative electrode collector such that a thickness was 500 $\mu$m and an area was 85 cm$^2$, thereby forming a negative electrode (A-20) consisting of a negative electrode collector and a negative electrode active material layer.
A separator (thickness: 20 $\mu$m) manufactured by W-SCOPE CO., LTD. was cut to have an area of 90 cm$^2$.
The separator was laminated on the negative electrode such that the negative electrode was inside the size of the separator, and the positive electrode was laminated thereon such that the positive electrode was inside the size of the negative electrode, thereby producing a laminate of negative electrode collector-negative electrode active material layer (slurry)-separator-positive electrode active material layer (slurry)-positive electrode collector. The production of the laminate was completed in approximately 1 minute in order to avoid the volatilization of the non-aqueous electrolytic solution.
A tab was attached by ultrasonic welding on the uncoated portion of the positive electrode slurry in the aluminum foil and the uncoated portion of the negative electrode slurry in the copper foil of the laminate, and the laminate was wrapped in an aluminum laminate and sealed with a vacuum sealer to produce a lithium ion secondary battery (semi-solid state secondary battery) for an evaluation test (S-19).

[Volume energy density evaluation method]

The positive electrode used in the preparation of each of the secondary batteries was punched out with a diameter of 10 mm, and the electrode collector was removed from the obtained punched piece. A thickness of the above-described positive electrode active material layer was measured, and a volume of the positive electrode active material layer of the punched piece was determined.

Separately, the discharge capacity (Ah) for standard was measured by charging and discharging under the condition 1 of [Output characteristics] test described later, an average voltage (V) during discharge was measured, and an electric energy (Wh) was determined by the product of the discharge capacity (Ah) for standard × the average voltage (V).

A volume energy density of the positive electrode active material layer was calculated by dividing the electric energy (Wh) obtained as described above by the volume (L) of the positive electrode active material layer obtained as described above. The obtained value was evaluated by applying the obtained value to the following evaluation standard.

-Evaluation standard-

A: 400 Wh/L or more
B: 380 Wh/L or more and less than 400 Wh/L
C: 350 Wh/L or more and less than 380 Wh/L
D: 325 Wh/L or more and less than 350 Wh/L
E: 300 Wh/L or more and less than 325 Wh/L
F: less than 300 Wh/L

[Output characteristics]

An output characteristic test was carried out on the secondary battery produced as described above under the following conditions.

Specifically, the secondary battery obtained above was charged and discharged under the condition of the following condition 1 to measure a discharge capacity for standard, and then charged and discharged under the condition of the condition 2 to measure a discharge capacity for output evaluation. From the obtained discharge capacity for standard and the obtained discharge capacity for output evaluation, a discharge capacity retention rate was calculated according to the following expression, and the obtained value was evaluated by applying the obtained value to the following evaluation standard.

· Condition 1: discharge capacity for standard

Constant current (CC)-constant voltage (CV) charging: current value of 25 mA, upper limit voltage of 3.9 V, termination current value of 2.5 mA
Constant current (CC) discharging: current value of 25 mA, termination voltage value of 2.0 V

· Condition 2: discharge capacity for output evaluation

CC-CV charging: current value of 250 mA, upper limit voltage of 3.9 V, termination current value of 25 mA
CC discharging: current value of 1,000 mA, termination voltage value of 2.0 V Discharge capacity retention rate (%) = [(Discharge capacity for output evaluation)/(Discharge capacity for standard)] × 100

-Evaluation standard-

A: 80% or more
B: 70% or more and less than 80%
C: 65% or more and less than 70%
D: 60% or more and less than 65%
E: 55% or more and less than 60%
F: less than 55%

[Table 4]

| Note | Electrode No. | Positive electrode | Negative electrode | Energy density | Output characteristics |
|---|---|---|---|---|---|
| Comparative Example | S-1 | C-1 | A-1 | F | F |
| Comparative Example | S-2 | C-2 | A-1 | F | F |
| Comparative Example | S-3 | C-3 | A-1 | E | F |
| Comparative Example | S-4 | C-4 | A-1 | F | F |
| Comparative Example | S-5 | C-5 | A-1 | F | F |
| Example | S-6 | C-6 | A-1 | D | E |
| Example | S-7 | C-7 | A-1 | D | E |
| Example | S-8 | C-8 | A-1 | D | E |
| Example | S-9 | C-9 | A-1 | D | D |
| Example | S-10 | C-10 | A-1 | D | D |
| Example | S-11 | C-11 | A-1 | D | D |
| Example | S-12 | C-12 | A-1 | D | C |
| Example | S-13 | C-13 | A-1 | D | D |
| Example | S-14 | C-14 | A-1 | D | D |
| Example | S-15 | C-15 | A-1 | B | C |
| Example | S-16 | C-16 | A-1 | A | B |
| Example | S-17 | C-17 | A-1 | A | B |
| Example | S-18 | C-17 | A-6 | A | A |
| Example | S-19 | C-20 | A-20 | A | A |

In the non-aqueous electrolytic solution secondary batteries (S-1 to S-5) having the positive electrodes (C-1 to C-5) produced using the positive electrode slurries of Comparative Examples 1 to 5 not satisfying at least one of the expression (1) to (4), the output characteristics were less than 55%, and the volume energy density was also less than 325 Wh/L.

On the other hand, in the non-aqueous electrolytic solution secondary batteries (S-6 to S-18) having the positive electrodes (C-6 to C-17) produced using the positive electrode slurries of Examples 1 to 12 satisfying all of the expressions (1) to (4), the output characteristics were 55% or more, and the volume energy density was 325 Wh/L or more. It was found that, in a case of using the electrode slurry according to the embodiment of the present invention, it was possible to obtain a secondary battery exhibiting excellent battery performance.

Furthermore, it was found that the non-aqueous electrolytic solution secondary battery (S-18) having, as the negative electrode, the negative electrode (A-6) produced using the negative electrode slurry according to the embodiment of the present invention had further excellent battery performance.

In addition, it was also found that the non-aqueous electrolytic solution secondary battery (S-19) having the positive electrode (C-20) and the negative electrode (A-20) produced using the electrode slurry according to the second form of the present invention had further excellent battery performance.

The present invention has been described with the embodiments thereof, any details of the description of the present invention are not limited unless described otherwise, and it is obvious that the present invention is widely construed without departing from the gist and scope of the present invention described in the accompanying claims.

The present application claims the priority of JP2022-210786 filed in Japan on December 27, 2022, the contents of which are incorporated herein by reference, as a part of the description of the present specification.

Explanation of References

10: non-aqueous electrolytic solution secondary battery

1: negative electrode collector
2: negative electrode active material layer
3: separator
4: positive electrode active material layer
5: positive electrode collector
6: operation portion (light bulb)

**Claims**

1. A slurry for forming an electrode of a non-aqueous electrolytic solution secondary battery, the slurry comprising:

   an electrode active material;
   a conductive auxiliary agent; and
   a dispersion medium,
   wherein the following expressions (1) to (4) are satisfied,

$$\text{the expression (1)} \qquad 0 < y - x \leq 10,$$

$$\text{the expression (2)} \qquad 0 \leq x \leq 30,$$

$$\text{the expression (3)} \qquad S_{BET} \geq 170,$$

$$\text{the expression (4)} \qquad \Delta E \leq 30,$$

   x is a liquid absorption amount (mL) of the dispersion medium per 100 g of a total of the electrode active material and the conductive auxiliary agent in the slurry for forming an electrode, and is calculated by the following expression (5),
   y is an amount (mL) of the dispersion medium per 100 g of the total of the electrode active material and the conductive auxiliary agent in the slurry for forming an electrode,
   $S_{BET}$ is a BET specific surface area ($m^2/g$) of the conductive auxiliary agent, and
   $\Delta E$ is an absolute value (mN/m) of a difference between a surface free energy of the dispersion medium and a surface free energy of the conductive auxiliary agent,

$$\text{the expression (5)} \qquad x = [Sa \times da/100] + [Sc \times dc/100],$$

   Sa is a liquid absorption amount (mL) of the dispersion medium per 100 g of the electrode active material,
   da is a proportion (% by mass) of the electrode active material to the total of the electrode active material and the conductive auxiliary agent in the slurry for forming an electrode,
   Sc is a liquid absorption amount (mL) of the dispersion medium per 100 g of the conductive auxiliary agent, and
   dc is a proportion (% by mass) of the conductive auxiliary agent to the total of the electrode active material and the conductive auxiliary agent in the slurry for forming an electrode.

2. The slurry for forming an electrode according to claim 1, further comprising:
   an electrolyte.

3. The slurry for forming an electrode according to claim 1 or 2,
   wherein the expression (2) satisfies the following expression (2a),

$$\text{the expression (2a)} \qquad 0 \leq x \leq 21.$$

4. The slurry for forming an electrode according to claim 1 or 2,
   wherein the expression (4) satisfies the following expression (4a),

the expression (4a) $\Delta E \leq 25$.

5. The slurry for forming an electrode according to claim 1 or 2,
wherein the surface free energy of the dispersion medium is 20 to 40 mN/m.

6. The slurry for forming an electrode according to claim 1 or 2,
wherein the Sa is 10 to 21 mL.

7. The slurry for forming an electrode according to claim 1 or 2,
wherein the Sc is 200 to 1,700 mL.

8. The slurry for forming an electrode according to claim 1 or 2,
wherein a bulk density of the conductive auxiliary agent is 35 g/L or less.

9. The slurry for forming an electrode according to claim 1 or 2,
wherein the conductive auxiliary agent is subjected to a surface treatment.

10. The slurry for forming an electrode according to claim 1 or 2, further comprising:
a dispersant.

11. The slurry for forming an electrode according to claim 1 or 2,
wherein a content of the electrode active material is 45% by mass or more.

12. The slurry for forming an electrode according to claim 1 or 2,
wherein a content of solid contents is more than 60% by mass.

13. The slurry for forming an electrode according to claim 1 or 2,
wherein the electrode active material is a positive electrode active material.

14. The slurry for forming an electrode according to claim 1 or 2,
wherein the proportion da of the electrode active material is 90.00% to 99.99% by mass, and the proportion dc of the conductive auxiliary agent is 0.01% to 10.00% by mass.

15. A non-aqueous electrolytic solution secondary battery comprising, in the following order:

a positive electrode;
a separator; and
a negative electrode,
wherein the slurry for forming an electrode according to claim 2 is used as a positive electrode active material layer and/or a negative electrode active material layer.

16. A manufacturing method of a non-aqueous electrolytic solution secondary battery, comprising:
applying the slurry for forming an electrode according to claim 1 or 2 onto an electrode collector to form an electrode active material layer.

## FIG. 1

## INTERNATIONAL SEARCH REPORT

| International application No. |
| --- |
| **PCT/JP2023/046714** |

| A. | CLASSIFICATION OF SUBJECT MATTER |
| --- | --- |

*H01M 4/139*(2010.01)i; *H01M 4/62*(2006.01)i; *H01M 10/052*(2010.01)i; *H01M 10/054*(2010.01)i; *H01M 10/0566*(2010.01)i; *H01M 10/058*(2010.01)i
FI:   H01M4/139; H01M4/62 Z; H01M10/052; H01M10/054; H01M10/0566; H01M10/058

According to International Patent Classification (IPC) or to both national classification and IPC

| B. | FIELDS SEARCHED |
| --- | --- |

Minimum documentation searched (classification system followed by classification symbols)

H01M4/139; H01M4/62; H01M10/052; H01M10/054; H01M10/0566; H01M10/058

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2004/006361 A1 (NIPPON ZEON CO.) 15 January 2004 (2004-01-15)<br>entire text, all drawings | 1-16 |
| A | JP 2008-021614 A (NISSAN MOTOR CO., LTD.) 31 January 2008 (2008-01-31)<br>entire text, all drawings | 1-16 |
| A | JP 2020-524362 A (CABOT CORPORATION) 13 August 2020 (2020-08-13)<br>entire text, all drawings | 1-16 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **04 March 2024** | **12 March 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2023/046714**

| Patent document cited in search report | | | Publication date (day/month/year) | Patent family member(s) | | | Publication date (day/month/year) |
|---|---|---|---|---|---|---|---|
| WO | 2004/006361 | A1 | 15 January 2004 | CN | 1666360 | A | |
| | | | | KR | 10-2005-0016713 | A | |
| JP | 2008-021614 | A | 31 January 2008 | US | 2008/0014498 | A1 | |
| | | | | entire text, all drawings | | | |
| | | | | EP | 1879244 | A2 | |
| JP | 2020-524362 | A | 13 August 2020 | US | 2018/0366772 | A1 | |
| | | | | entire text, all drawings | | | |
| | | | | WO | 2018/232286 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017147222 A
- JP 2016201308 A
- JP 2005108835 A
- JP 2012185938 A
- WO 2018135395 A
- JP 2016500465 A
- JP 2022210786 A

**Non-patent literature cited in the description**

- *Journal of the Adhesion Society of Japan*, 1972, vol. 8, 131